# EUROPÄISCHE PATENTSCHRIFT

(11) **EP 1 874 602 B1**
(45) Veröffentlichungstag und Bekanntmachung des Hinweises auf die Patenterteilung: **05.12.2012**
(21) Anmeldenummer: 06724475.6
(22) Anmeldetag: 20.04.2006
(51) Int. Cl.: B60T 8/32

(54) **DRUCKMODULATORSTEUERUNG**
PRESSURE MODULATOR CONTROL
COMMANDE DE MODULATEUR DE PRESSION

(30) Priorität: 21.04.2005 DE 202005018018 U; 21.11.2005 DE 102005055751
(43) Veröffentlichungstag der Anmeldung: 09.01.2008
(73) Patentinhaber: IPGATE AG, 8808 Pfäffikon SZ (CH)
(72) Erfinder: LEIBER, Heinz, 71739 Oberriexingen (DE); LEIBER, Thomas, 81675 München (DE)
(74) Vertreter: Lenzing Gerber Stute
(86) Internationale Anmeldenummer: PCT/EP2006/003648
(87) Internationale Veröffentlichungsnummer: WO 2006/111393

(56) Entgegenhaltungen:
- WO-A-2004/005095
- DE-A1- 3 342 552
- DE-A1- 4 445 975
- DE-A1- 10 318 401
- DE-A1- 19 753 786
- US-A1- 2003 160 503

## Beschreibung

Die vorliegende Erfindung betrifft eine Bremsanlage nach dem Oberbegriff des Anspruchs 1.

### Stand der Technik:

Moderne Bremsanlagen bestehen aus Bremskraftverstärkung, d. h. Umsetzung der Pedalkraft in ein entsprechendes verstärktes Bremsmoment an den Radbremsen und Bremskraftregelung über offene oder geschlossene Regel- und Steuerkreise. Als Übertragungsmittel zur Erzeugung des Bremsdruckes aus der Pedalkraft wird bis auf wenige Ausnahmen im PKW-Bereich die hydraulische Leitung eingesetzt.

Weit verbreitet ist eine Aufteilung in Baueinheiten zwischen Bremskraftverstärkung (BKV) oder Bremskraftsteuerung und Bremskraftregelung in einer Hydraulikeinheit (HE). Diese Konfiguration wird vorwiegend eingesetzt bei Systemen wie Antiblockiersystem (ABS), Antischlupfsystem (ASR), Elektronisches Stabilitätsprogramm (ESP) oder auch elektrohydraulischer Bremse (EHB).

Die Hydraulikeinheit (HE) besteht aus Magnetventilen, Mehrkolbenpumpen für 2-Kreis-Bremssyteme, Elektromotor zum Pumpenantrieb, hydraulischem Speicher und mehreren Druckgebern. Die Druckregelung erfolgt in der Weise, dass zur Bremsmomentreduzierung Druckmittel über Magnetventile aus den Radbremsen in einen Speicher abgelassen wird und von der Pumpe in den Hauptbremszylinder zurückgepumpt wird, was eine Pedalbewegung bewirkt. Sowohl Druckanstieg als auch -abfall wird über Magnetventile gesteuert, bei der teilweise Druckgeber für die Magnetventilsteuerung verwendet werden. Außer bei der EHB erfolgt die Bremskraftverstärkung mit dem Vakuum-BKV, welcher teilweise Schaltmittel und Sensoren beinhaltet zur sog. Bremsassistentfunktion und auch zur Erkennung des sog. Ansteuerpunktes. Als Energiequelle für das Vakuum wird bei Ottomotoren der Verbrennungsmotor genutzt, der aber als Direkteinspritzer, insbesondere bei größerer Höhe, nur noch ein schwaches Vakuum liefert. Bei Dieselmotoren wird eine mechanische oder elektrisch angetriebene Vakuumpumpe eingesetzt. Neueste ESP-Systeme sind in der Lage, durch Schaltung der Magnetventile und Pumpe eine zusätzliche Bremskraftverstärkung oder bei Ausfall des BKV eine Bremskraftverstärkung mit größerer Zeitkonstante zu erzielen. Die Beschreibung dieser Systeme und Funktionen ist ausführlich im Bremsenhandbuch Vieweg Verlag, Ausgabe 2003, beschrieben.

Mitte der 1980er Jahre wurde von Teves das sog. Mark II und von Bosch das ABS3 eingesetzt, welche als integrierte Einheiten alle Komponenten für Bremskraftverstärkung und Regelung beinhalteten mit hydraulischem BKV, s. Kraftfahrtechnisches Handbuch Bosch 1986, 20. Auflage. Aus Kostengründen haben sich diese Systeme nicht durchgesetzt, bis auf die Anwendung bei Sonderschutzfahrzeugen. Dasselbe gilt für voll elektrische Bremssysteme, sog. EMB, mit E-Motoren an den Radbremsen, die intensiv in Verbindung mit dem 42-V-Bordnetz entwickelt wurden. Neben den Mehrkosten ist hier ein neues redundantes Bordnetz für die Energieversorgung notwendig, um im Fehlerfall die Bremsfähigkeit eines Bremskreises sicherzustellen.

Zur Gattung der EMB-Systeme zählt auch die Keilbremse mit elektromotorischem Antrieb. Hierfür ist ebenfalls ein redundantes Bordnetz trotz des geringeren Energiebedarfes notwendig. Die konstruktive Realisierung der Keilbremse, welche aus Hysteresegründen zusätzliche Rollen benötigt, welche eine Integration in den Bremssattel erfordern, ist im Augenblick nicht gelöst. Die Keilbremse mit ihren elektromotorischen Antrieben mit Sensoren muss den harten Umgebungsbedingungen (Staub, Wasser, hohe Temperaturen) standhalten.

Die Systeme für BKV und HE sind sehr weit entwickelt, insbesondere die Steuer- und Regelfunktionen für ABS bis ESP. Z. B. ist durch die druckgeführte Steuerung der Magnetventile eine sehr feine Dosierung des Bremsdruckes möglich, mit dem auch eine variable Bremskraftabstimmung EBV möglich ist. Die Druckabbaugeschwindigkeit ist noch nicht optimal, da sie stark nichtlinear ist. Außerdem wird bei einem µ-Sprung oder bei kleinem Reibbeiwert die Druckabbaugeschwingkeit durch die relative geringe Pumpleistung bestimmt, was zu großen Regelabweichungen führt und damit einen Bremswegverlust zur Folge hat.

Bei dem aus der DE 3342552 bekannten Bremssystem dient der Hauptbremszylinder zur Erzeugung eines pedalabhängigen Drucks, der als Führungsgröße für eine elektronische Steuer- und Regeleinrichtung dient, welche den Ausgangsdruck einer unmittelbar mit dem Bremskreis verbundenen elektrohydraulischen Servoeinrichtung auf einen durch die Führungsgröße bestimmten Wert regelt. Bei Ausfall der Regeleinrichtung oder der Servoeinrichtung selbst wird der Druck im Bremskreis vom Hauptzylinder erzeugt. Anstelle der im Normalbetrieb mittels des Hauptbremszylinders erzeugten Führungsgröße, ist es möglich, eine im Rahmen eines Antiblockiersystems oder im Rahmen einer Schlupfregelung der Antriebsregelung des Kraftfahrzeuges erzeugte Führungsgröße auf die elektronische Steuer- und Regeleinrichtung und somit auf die elektrohydraulische Servoeinrichtung einwirken lassen. Die Servoeinrichtung weist eine elektrisch betätigte hydraulische Kolben-Zylinder-Einheit auf, deren Arbeitsraum mit dem Bremskreis in Verbindung steht und deren Kolben mittels eines Elektromotors axial verstellbar ist. Die Drehbewegung des Elektromotors wird dabei über eine mit dem Kolben verbundene Spindel in eine Längsbewegung des Kolbens umgesetzt.

Aus der DE 4445975 ist eine Brake-by-wire Bremsanlage vorbekannt, bei der ein Kolben mittels eines Elektromotors angetrieben ist. Eine Regelung der Druckänderung erfolgt dabei über den Erregerstrom, wobei durch einen Drucksensor der im Radbremszylinder herrschende Druck von einem Steuergerät überwacht wird.

US2003/0160503 offenbart ebenfalls eine Brake-by-wire Bremsanlage, bei der das Bremssignal elektronisch an einzelne hydraulisch wirkende Radbremsen übermittelt wird.

Aus der DE 19753786 ist eine Bremsanlage für Kraftfahrzeuge vorbekannt, bei der ein Bremspedal auf einen Hauptbremszylinder wirkt, so dass bei Ausfall der elektrisch angesteuerten Bremsdruckgeber ein Bremsdruck in den Radbremsen aufbaubar ist.

Aus der DE 10318401 ist ebenfalls eine Brake-by-wire Bremsanlage vorbekannt, bei der ein Elektromotor über einen Spindelantrieb eine Kolbenstange eines hydraulisch wirkenden Bremskraftverstärkers verstellt. Die ABS-Funktion wird dabei je Radbremse durch ein Auslass- und ein Einlassventil realisiert.

Aus der WO2004/005095 ist ein Bremskraftverstärker bekannt, bei dem das Kolben-Zylinder-System lediglich die erforderliche Bremskraftverstärkung erzeugt.

Aus der DE 3317629 ist ein Verfahren zur Steuerung einer bremsschlupfgeregelten Bremsanlage für Kraftfahrzeuge bekannt. Die DE 3632836, DE 3440972 und DE 3446824 beschreiben ähnliche Bremsanlagen, bei der ebenfalls ein hydraulischer Bremskraftverstärker auf einen Kolben eines Kolben-Zylinder-Systems wirkt.

Die DE 10116755 offenbart ein spezielles Verfahren und/oder eine Regelung des Bremsdruckaufbaus bei Vollbremsung auf Hochreibwert für eine fremdbremsfähige Bremsanlage mit Blockierschutzregelung, wobei das Drehverhalten der einzelnen Fahrzeugräder und der momentane Reibwert und/oder die Fahrbahnsituation ermittelt oder abgeschätzt und zur Steuerung des Bremsdrucks ausgewertet werden.

Aus der DE 3723916 ist eine hydraulische Zweikreis-Bremsanlage mit einem Twin-Hauptzylinder vorbekannt, bei dem jedem Bremskreis ein Hauptzylinderkolben zugeordnet ist.

### Aufgabe der Erfindung

Die vorliegende Erfindung hat die Aufgabe, ein neuartige Bremsanlage bereitzustellen, die klein und kompakt in ihren Abmessungen ist.

Diese Aufgabe wird durch eine Bremsanlage mit den Merkmalen des Anspruch 1 gelöst. Weitere vorteilhafte Ausgestaltungen der Bremsanlage nach Anspruch 1 ergeben sich durch die Merkmale der Unteransprüche.

Das erfindungemäße Bremssystem zeichnet sich vorteilhaft dadurch aus, dass es die Bremskraftverstärkung und die Servoeinrichtung auf kleinsten Raum pro Bremskreis mittels lediglich einer Kolben-Zylinder-Einheit realisiert. Die Kolben-Zylinder-Einheit dient gleichsam für den Bremsdruckaufbau und Bremsdruckabbau, zur Realisierung der ABS- und Antischlupfregelung sowie bei Ausfall der Energieversorgung oder Fehlfunktion der Antriebsvorrichtung. Somit ergibt sich vorteilhaft eine kleine integrierte und kostengünstige Baueinheit für die Bremskraftverstärkung (BKV) und Regelung, womit eine Einsparung von Bauraum, Montagekosten und zusätzlichen hydraulischen und Vakuum-Verbindungsleitungen einhergeht. Zudem wirkt aufgrund der kurzen Baulänge, vorteilhaft z.B. der Federdom bei einem Frontcrash nicht auf den Hauptzylinder und das Pedalwerk ein.

Durch das vorteilhafte Vorsehen einer Sensorik sowie eines Wegsimulators, kann eine variable Pedalcharakteristik wie Brake-by-wire-Funktion, d.h. Bremsdruckanstieg unabhängig von Pedalbetätigung frei variabel, auch unter Berücksichtigung der Bremswirkung des Generators bei rekuperierbaren Bremsen, eingeregelt werden.

Ferner erfolgt bei der entsprechenden Ausführung kein nachteiliges Durchfallen des Bremspedals bei Ausfall des Antriebs, da das Pedal direkt auf den Kolben des Systems wirkt. Vorteilhaft ergeben sich hierdurch gleichfalls geringere Pedalkräfte bei Ausfall der Energieversorgung, da die Kolben eine kleinere Wirkfläche haben als konventionelle Hauptbremszylinder. Dies ist möglich durch Trennung des Kolbenweges bei intakter und ausgefallener Verstärkung. Man spricht hier von einem Übersetzungssprung, der die Pedalkraft für dieselbe Bremswirkung um bis zu 40 % reduziert. Durch die Reduzierung des Gesamtaufwandes einschließlich der elektrischen Anschlüsse, ergibt sich zudem vorteilhaft eine Reduzierung der Ausfallrate.

Durch den elektromotorischen Antrieb ist weiterhin eine Verbesserung der ABS/ESP Regelung durch fein dosierte Drucksteuerung mit variablen Druckanstiegs- und insbesondere Druckabfallsgeschwindigkeiten realisierbar. Auch ist eine Druckabsenkung unter 1 bar im Bereich des Vakuums für Funktion bei kleinsten Reibkraftbeiwerten, z. B. nassem Eis, möglich. Ebenso ist ein schneller Druckanstieg bei Bremsbeginn z.B. 0 - 100 bar in weniger als 50 ms erzielbar, was eine erhebliche Bremswegverkürzung zur Folge hat.

Durch das vorteilhafte Vorsehen eines 2/2-Wegeventils für die Bremskraftverstärkung, Halten des eingeregelten Bremsdrucks und die Regelfunktion benötigt die erfindungsgemäße Bremsanlage erheblich weniger Energie.

Die Ventile sind zusammen mit den Hydraulikleitungen mit einem möglichst kleinen Strömungswiderstand, d.h. großen Strömungsquerschnitten, auszubilden, damit vorteilhaft ein möglichst schneller und auch variabler Druckaufbau bzw. Druckabbau mittels des (der) Kolben-Zylinder-Systems(e) realisierbar ist, da dann insbesondere die Ventile und auch die Verbindungskanäle und Rohrleitung keine Drosselwirkung mehr aufweisen. Hierdurch ist gewährleistet, dass das Kolben-Zylinder-System alleine die Druckaufbau- bzw. Druckabbaugeschwindigkeit bestimmt.

Es ist ferner möglich, für jeden Bremskreis oder jede Radbremse ein eigenes Kolben-Zylinder-System mit jeweils dazugehörigem Antrieb vorzusehen. Ebenso ist es möglich, ein Kolben-Zylinder-System zu verwenden, bei dem zwei Kolben in einem Zylinder axial verschieblich angeordnet sind, wobei die Zylinder hydraulisch gekoppelt sind und lediglich ein Kolben mechanisch von der Antriebsvorrichtung elektromotorisch angetrieben ist.

Diese Ausführungen zeigen, dass das Konzept mit dem schnellen und variabel geregelten elektromotorischen Kolbenantrieb und dem Magnetventil mit der Auswertung des Druckes und Kennfeldes ein hohes Potenzial für den Regler darstellt, was zusätzliche Bremswegverkürzungen und Fahrstabilität ermöglicht.

Vorteilhaft sind druckausgeglichene Sitzventile oder Schieberventile mit geringer Temperaturabhängigkeit und kleiner Schaltzeit vorzusehen, damit kleinere Totzeiten erzielbar und somit kurze Taktzeiten erzielbar sind.

Die Bremsanlage ist ferner mit einem regelungstechnischen Verfahren derart anzusteuern, dass sich möglichst kurze Umschaltzeiten ergeben, d.h. möglichst schnell auf einen anderen Regelungskanal bzw. eine andere Radbremse umgeschaltet werden kann, um diese anzusteuern. Hierbei hat es sich als vorteilhaft herausgestellt, wenn bereits während des Einregelns eines Druckes für eine Radbremse bereits die Signale für die nächste einzustellende Radbremse ausgewertet werden, so dass nach Beenden des Regelungsvorganges für die erste Radbremse unmittelbar auf die andere Radbremse umgeschaltet werden kann.

Die Erfindung zeigt ein spezielles Verfahren zur Steuerung von konstanten und variablen Gradienten durch Auswertung der Druckvolumenkennlinie der entsprechenden Bremse über Kolbenweg, Strom oder Druck auf.

Ferner hat es sich als vorteilhaft herausgestellt, größere Bremsrohrdurchmesser sowie heizbare Bremsrohre vorzusehen.

Nachfolgend werden verschiedene Ausgestaltungen der erfindungsgemäßen Bremsanlage anhand von Zeichnungen näher erläutert.

Es zeigen:
- Fig. 1:: Eine erste Ausführungsform einer Bremsanlage mit einem Bremskreis für zwei Radbremsen;
- Fig. 2:: eine zweite Ausführungsform der Bremsanlage mit zwei Kolben-Zylinder-Systemen für zwei Bremskreise für jeweils zwei Radbremsen;
- Fig. 3:: einen Wegsimulator für das erfindungsgemäße Bremssystem;
- Fig. 4:: ein dritte Ausführungsform einer Bremsanlage, wobei das Kolben-Zylinder-System einen Zylinder und zwei Kolben aufweist;
- Fig. 5:: prinzipieller Aufbau der erfindungsgemäßen Bremsanlage;
- Fig. 6:: Druckverlauf beim Druckabbau von einem Niveau P₀, welches z.B. der Blockiergrenze von trockener Straße entspricht für konventionelle und erfindungsgemäße Bremsanlage;
- Fig. 7:: Druckabbau und Druckaufbau bei hohem und bei niedrigem µ für konventionelle Bremsanlage
- Fig. 7a:: Druckabbau und Druckaufbau bei hohem und bei niedrigem µ für erfindungsgemäße Bremsanlage
- Fig. 8:: zeitlichen Verlauf von Radgeschwindigkeit und Druck bei konventioneller und bei der erfindungsgemäßen Bremsanlage;
- Fig. 9 bis 10a:: Druckverläufe und Ventilstellungen bei Druckabbau;
- Fig. 11:: zeitlicher Ablauf mehrerer Regelzyklen.

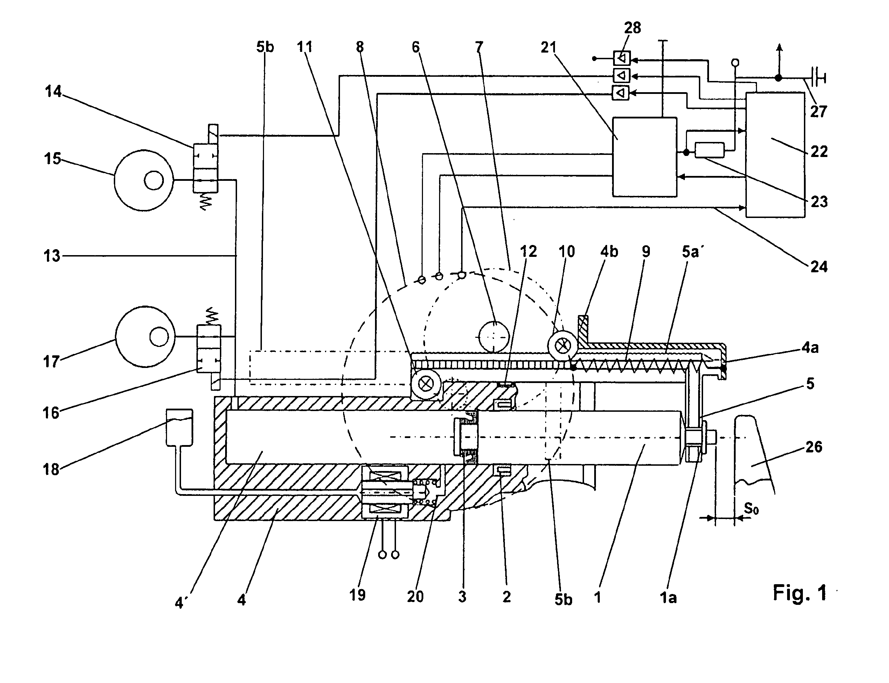

Die Fig. 1 zeigt einen Ausschnitt aus der integrierten Einheit, die für die Druckerzeugung bzw. Bremskraftverstärkung zuständig ist. Hierbei wird der Kolben 1 mit den üblichen Dichtungen 2 und 3 im Zylindergehäuse 4 parallel zum Kolben über eine speziell gestaltete Zahnstange 5a bewegt. Die Dichtung 2 ist so konzipiert, dass sie auch bei Unterdruck in der Kolbenkammer 4' abdichtet. Diese Zahnstange 5a überträgt die Kraft auf das vordere ballige Ende des Kolbens 1. Dieser hat an dieser Stelle einen Bundbolzen 1a, über den die Zahnstange 5a mit Rückstellfeder 9 den Kolben in die Ausgangsstellung bringt. Hier liegt die Zahnstange am Zylindergehäuse 4a an. Diese außenliegende Feder hat den Vorteil, dass der Zylinder kurz baut und wenig Totraum hat, was für die Entlüftung vorteilhaft ist. Die Zahnstange hat wegen der Querkräfte eine Lagerung in den Rollen 10 und 11 mit Gleitstück 12. Die Figur 1 zeigt deutlich, dass die parallele Anordnung der Zahnstange zum Kolben eine kurze Baulänge bewirkt. Die Baueinheit muss sehr kurz bauen, um außerhalb der Crashzone zu sein. Die Zahnstange ist dazu insbesondere mittels eins sehr biegesteifen H-Profil auszubilden. Die Anordnung der Rollen ist so gewählt, dass die Zahnstange in der Endstellung 5b (gestrichelt dargestellt) mit der größten Biegekraft durch die versetzt angreifende Druckkraft eine relativ kleine Biegelänge hat. Die Zahnstange wird über Zahnprofil 5a' und Zahnrad 6 über das Getrieberad 7 vom Ritzel des Motors 8 angetrieben. Dieser Motor mit kleiner Zeitkonstante ist vorzugsweise ein bürstenloser Motor als Glockenläufer mit eisenloser Wicklung oder vorzugsweise ein Motor entsprechend der zwischen Prioritästag und Anmeldetag der Patentanmeldung veröffentlichten Schriften WO 2006/000259 A1 und WO 2006/000260 A1. Dieser wird von den Endstufen 21 vorzugsweise über drei Stränge von einem Microcontroller (MC) 22 gesteuert. Hierfür misst ein Shunt 23 den Strom und ein Sensorsignal 24 und gibt die Position des Rotors und über entsprechende Zähler die Position des Kolbens an. Die Strom- und Positionsmessung wird neben der Motorsteuerung zur indirekten Druckmessung genutzt, da das Motormoment proportional zur Druckkraft ist. Hierfür muss im Fahrzeug bei Inbetriebnahme und auch während des Betriebs ein Kennfeld angelegt werden, in dem den verschiedenen Strömstärken die Position des Kolbens zugeordnet wird. Im Betrieb wird dann entsprechend der später beschriebenen Verstärkerkennlinie eine Position des Kolbens angefahren, die entsprechend dem Kennfeld einem bestimmten Druck entspricht. Stimmen Position und Motormoment nicht ganz überein, z. B. durch Temperatureinfluss, so wird das Kennfeld im Betrieb adaptiert. Dadurch wird das Kennfeld laufend adaptiert. Das Ausgangskennfeld wird gebildet aus vorzugsweise Druck-Volumen-Kennlinie der Radbremse, Motorkennwert, Getriebewirkungsgrad und Fahrzeugverzögerung. Mit letzterer kann eine pedalkraftproportionale Fahrzeugverzögerung erreicht werden, damit sich der Fahrer nicht auf unterschiedliche Bremswirkungen einstellen muss.

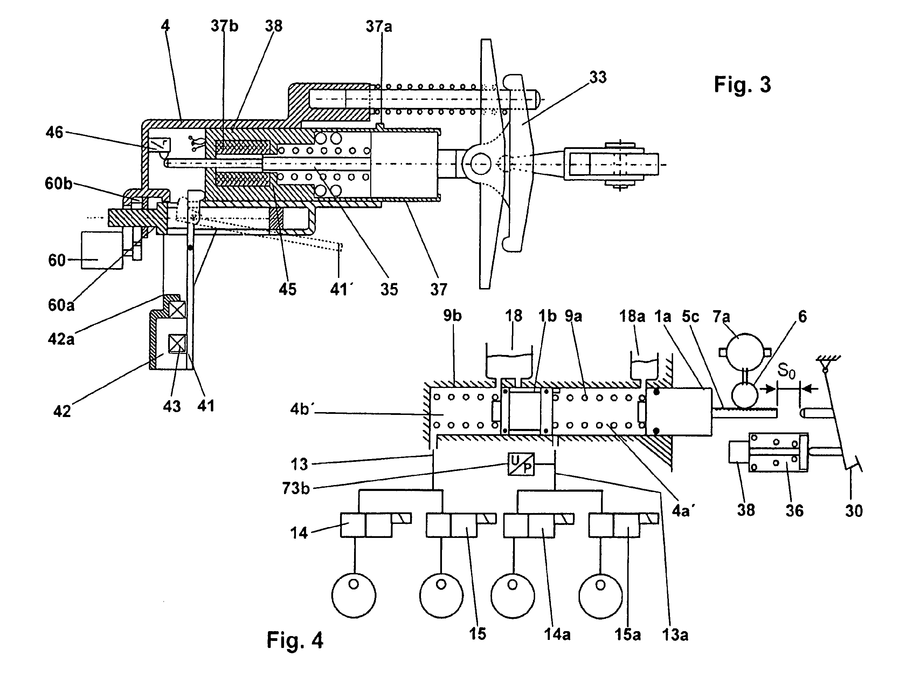

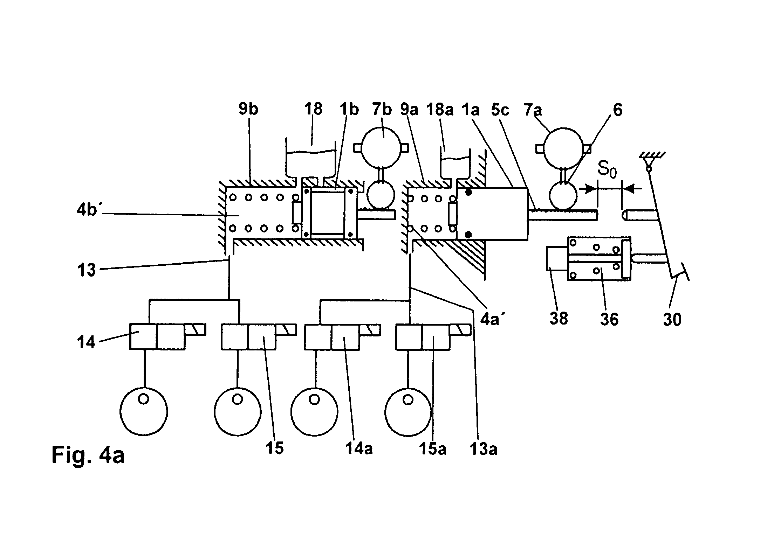

Der Kolben 1 erzeugt in der Leitung 13 einen entsprechenden Druck, der über das 2/2-Magnetventil (MV) 14 zur Radbremse 15 bzw. über Magnetventil MV 16 zur Radbremse 17 gelangt. Diese vorbeschriebene Anordnung hat mehrere Vorteile. Anstelle der zwei kostengünstigen kleinen Magnetventile könnte eine weitere Kolben-Motoreinheit eingesetzt werden wie sie in Fig. 4 dargestellt ist. Dies bedeutet jedoch erheblich mehr Kosten, Gewicht und Bauraum.

Es genügt, für jeden Bremskreis eine Kolben-Motoreinheit einzusetzen.

Der zweite Vorteil ist der sehr kleine Energiebedarf und auch die Auslegung des Motors nur für Impulsbetrieb. Dieser wird erreicht, indem bei Erreichen des Sollwertes des Druckes bzw. Motormoments die Magnetventile geschlossen werden und der Motor anschließend nur noch mit geringer Stromstärke betrieben wird, bis vom Bremspedal ein neuer Sollwert vorgegeben wird. Damit wird der Energiebedarf bzw. die mittlere Leistung extrem klein. Z.B. würde bei einer herkömmlichen Auslegung bei einer Vollbremsung aus 100 km/h der Motor 3 einen hohen Strom aufnehmen. Entsprechend der Erfindung benötigt der Motor für den Kolbenweg nur ca. 0,05 s Strom, was 1,7 % ausmacht. Wenn die Werte auf die Leistung bezogen werden, so würde im herkömmlichen Fall das Bordnetz mit >1000 W über mindestens 3s belastet und beim vorgeschlagenen Impulsbetrieb nur ca. 50 W mittlerer Leistung. Eine noch größere Energieeinsparung ergibt sich bei einer Vollbremsung aus 250 km/h mit Bremszeiten bis zu 10 s auf trockener Straße. Zur Entlastung der Impulsbelastung des Bordnetzes kann hier ein Speicherkondensator 27 in der Stromversorgung verwendet werden, der auch entsprechend der Linie mit Pfeil für die weiteren Elektromotoren verwendet werden kann.

In der Druckleitung 13 können vor oder nach dem Magnetventil Druckgeber eingesetzt werden, welche nicht dargestellt sind, da diese dem Stand der Technik entsprechen.

Der Kolben 1 wird über das Schnüffelloch mit Flüssigkeit aus dem Vorratsbehälter 18 versorgt. In dieser Leitung ist ein Magnetventil 19 eingeschaltet. Erfolgt eine schnelle Kolbenbewegung zur Druckreduzierung, so könnte die Dichtung 3 insbesondere bei kleinen Drücken Flüssigkeit aus dem Vorratsbehälter nachschnüffeln, was bekannter weise nachteilig ist. Hierzu wird das Niederdruck-Magnetventil 19 eingeschaltet und die Verbindung zum Vorratsbehälter unterbrochen. Mit dieser Schaltung kann auch Unterdruck in den Radkreisen 15/17 erzielt werden, was der Radregelung bei sehr kleinen Reibbeiwerten z. B. auf nassem Eis zugute kommt, da in der Radbremse kein Bremsmoment erzeugt wird. Andererseits kann das Nachschnüffeln bei Dampfblasenbildung bewusst genutzt werden, bei der der Kolben bereits am Anschlag ist ohne dass der entsprechende Druck erreicht ist. Hierbei werden die Kolben mit den Magnetventilen entsprechend gesteuert, so dass der oszillierende Kolben Druck aufbaut. Beim Verzicht auf diese Funktion kann an Stelle des Magnetventils 19 eine schnüffelfeste Dichtung 3 eingesetzt werden.

Die Magnetventile 14, 16, 19 werden über Endstufen 28 vom Microcontroller 22 gesteuert.

Bei Ausfall der Energieversorgung oder des Elektromotors wird der Kolben von einem Hebel 26 der Betätigungseinrichtung bewegt. Zwischen diesem und dem Kolben ist ein Spiel eingebaut, das verhindert, dass bei schneller Pedalbetätigung der Hebel auf den Kolben auftrifft, bevor der Motor den Kolben bewegt.

Die Regelfunktion bezüglich Radgeschwindigkeit und Raddruck bei ABS / ASR oder Gierrate und Raddruck bei ESP wurde in verschiedenen Publikationen dargestellt, so dass auf eine erneute Beschreibung verzichtet wird.

In einer Tabelle sollen die wesentlichen Funktionen des neuen Systems gezeigt werden:

| | | **Druck** | | **Druck** | |
|---|---|---|---|---|---|
| **Funktionen** | Elektromotor | Radbremse 15 | Magnetventil 14 | Radbremse 17 | Magnetventil 15 |
| **BKV** | Ein | Aufbau | 0 | Aufbau | 0 |
| | teilbestromt | P = konstant | 1 | P = konstant | 1 |
| | teilbestromt | Abbau | 0 | Abbau | 0 |
| **Bremsregelung** | Ein | Aufbau | 0 | Aufbau | 0 |
| | teilbestromt | P = konstant | 1 | P = konstant | 0 |
| | Ein | Aufbau | 0 | P = konstant | 1 |
| | teilbestromt | Abbau | 0 | P = konstant | 1 |
| | teilbestromt | Abbau | 0 | Abbau | 0 |

Die Höhe der Teilbestromung richtet sich nach der von dem BKV oder der Bremsregelung gewünschten Druckanstiegs- oder Abbaugeschwindigkeit. Entscheidend ist hierfür eine extrem kleine Zeitkonstante des Elektromotors, d. h. ein zeitlich schneller Momentanstieg und Momentreduzierung über kleine bewegliche Massen des gesamten Antriebs, da die Kolbengeschwindigkeit die Druckänderungsgeschwindigkeit bestimmt. Zusätzlich ist für eine Bremsregelung eine schnelle und genaue Positionsregelung der Kolben notwendig. Bei der schnellen Momentenreduzierung wirkt zusätzlich die von den Bremssattel herrührende Druckkraft unterstützend, welche aber bei kleinen Drücken gering ist. Aber gerade hier soll auch die Druckabfallgeschwindigkeit groß sein, um große Regelabweichungen von der Radgeschwindigkeit auf z. B. Eis zu vermeiden.

Bei diesem Konzept besteht ein entscheidender Vorteil gegenüber der herkömmlichen Drucksteuerung über Magnetventile, da die Kolbengeschwindigkeit die Druckänderungsgeschwindigkeit bestimmt. Z. B. ist bei kleinem Differenzdruck am Druckabbau bestimmenden Auslassventil der Durchfluss und damit die Druckabsenkungsgeschwindigkeit gering. Die Kolbeneinheit kann wie bereits erwähnt für jedes Rad getrennt mit und ohne Magnetventil eingesetzt werden. Um die Vorteile des geringen Energieverbrauches zu nutzen, müsste der Elektromotor mit einer schnellen elektromagnetischen Bremse erweitert werden, welche aber aufwändiger ist. Die gezeigte Ausführung mit einer Kolbeneinheit und zwei Magnetventilen ist vom Bauraum und den Kosten her zu bevorzugen. Regelungstechnisch gilt jedoch hier die Einschränkung, dass bei einem Druckabbau an einem Rad das andere Rad keinen Druck aufbauen kann. Da jedoch die Druckabbauzeit ca. < 10 % der Druckaufbauzeit im Regelzyklus beträgt, ist diese Einschränkung ohne nennenswerten Nachteil. Die Regelalgorithmen müssen entsprechend angepasst werden z.B. muss nach einer Phase konstanten Drucks von Öffnung des Magnetventils der Elektromotor mit einem Strom erregt werden, dem der passende Druck in der Radbremse gemäß der BKV-Kennlinie zugeordnet ist oder z.B. 20% höher ist als der vorausgegangene Blockierdruck im Regelzyklus. Alternativ kann z.B. auch während der Regelung ein adaptives Druckniveau eingesteuert werden, welches 20 % höher liegt als der höchste Blockierdruck der Achse oder des Fahrzeugs. Als Blockierdruck gilt der Druck, bei dem das Rad instabil in größerem Schlupf läuft.

Das Konzept bietet zusätzlich regelungstechnisch neue Möglichkeiten zur Druckabsenkung. Regelungstechnisch gilt, dass die Druckabsenkung und Bremsmomentreduzierung im wesentlichen proportional zur Drehbeschleunigung des Rades, der Hysterese der Dichtung und umgekehrt proportional zum Trägheitsmoment des Rades sind. Aus diesen Werten kann jeweils der Betrag der erforderlichen Druckabsenkung berechnet werden und der Kolben kann bei geschlossenen MV bereits das entsprechende Volumen unter Berücksichtigung des beschriebenen Kennfeldes bereitstellen. Wenn dann das MV öffnet, erfolgt eine sehr schnelle Druckabsenkung praktisch in das Vakuum. Hierbei wird zugrunde gelegt, dass das MV durch entsprechende Öffnungsquerschnitte im Gegensatz zu heutigen Lösungen eine kleinere Drosselwirkung besitzt. Hierbei kann der Druckabbau schneller als bei konventionellen Lösungen über ein speziell bereitgestelltes Kammervolumen entsprechend der Druckvolumenkennlinie erfolgen. Alternativ ist eine Druckabsenkung in ein Kammervolumen, welches geringfügig größer als der notwendige Druckabbau ist, möglich, z.B. durch entsprechende Verstellgeschwindigkeit des Kolbens. Zur genauen Regelung des Druckabbaus ist hier eine sehr kleine Schaltzeit zum Schließen des Magnetventils notwendig, was vorzugsweise durch Vorerregung und/oder Übererregung gelöst werden kann. Außerdem ist es für Spezialfälle der Regelung vorteilhaft, Magnetanker des 2/2 Magnetventils über bekannte PWM-Verfahren in eine Zwischenstellung zu bringen, um eine Drosselwirkung zu erzeugen.

Der sehr schnelle Druckabbau kann möglicherweise Druckschwingungen erzeugen, die auf das Rad zurückwirken. Um diese schädliche Wirkung zu vermeiden, kann der Kolbenweg als weitere Alternative entsprechend, z.B. 80% des erforderlichen Druckabbaus angesteuert werden (schneller Druckabbau). Die restlichen erforderlichen 20% des Druckabbaus können dann durch eine anschließend gesteuerte langsame Kolbenbewegung langsam geschehen oder bei der Alternative mit der Druckabbausteuerung über Magnetventile durch Taktung des Magnetventils und gestuften Abbau. So werden schädliche Radschwingungen vermieden. Der langsame Druckabbau kann so lange fortgesetzt werden, bis das Rad bei der ABS-Regelung wieder beschleunigt.

Damit sind sehr kleine Regelabweichungen der Radgeschwindigkeit möglich. Sinngemäß kann die oben beschriebene Methode auch auf den Druckaufbau angewendet werden. Die Geschwindigkeiten der Druckerhöhung können nach regelungstechnischen Kriterien optimiert werden. Damit kann das Ziel erreicht werden, dass das Rad in unmittelbarer Nähe des Reibkraftmaximums gebremst wird und so optimale Bremswirkung bei optimaler Fahrstabilität erreicht wird.

Vorstehend wurden Spezialfälle der Regelung erwähnt, bei der eine Drosselwirkung vorteilhaft ist. Dies ist z.B. der Fall, wenn bei beiden Rädern gleichzeitig ein Druckabbau notwendig ist. Hier ist die Drosselwirkung vorteilhaft, bis der Stellkolben ein so großes Kammervolumen bereit gestellt hat, so dass von unterschiedlichem Druckniveau der dann anschließend schnelle Druckabbau in das Vakuum erfolgen kann. Ähnlich kann verfahren werden, d.h. wenn die Magnetventile im Ventilquerschnitt eine eingebaute Drossel haben und an beiden Radkreisen gleichzeitig Druckaufbau stattfinden soll. Der individuelle alternierende Druckaufbau ist jedoch zu bevorzugen wegen des dosierten Druckaufbaus mit Auswertung des Kennfeldes und geregelter Verstellgeschwindigkeit des Kolbens. Dasselbe alternierende Verfahren kann alternativ zu o.g. mit der Drosselwirkung für den Druckabbau angewandt werden. Als weitere Möglichkeit kann der Kolben bereits mit einem Regelsignal mit geringerer Ansprechschwelle als das Regelsignal für den Druckabbau zurückgefahren werden. Nach dem Stand der Technik ist dies das Signal, bei der der Regler eine Blockierneigung erkennt und das MV auf Druckhalten schaltet (siehe Bremsenhandbuch S. 52-53). Dieses Signal wird 5-10 ms vor dem Signal zum Druckabbau ausgegeben. Der vorgeschlagene schnelle Antrieb ist in der Lage, innerhalb von ca. 5ms ein Kammervolumen für 10 bar Druckabsenkung bereitzustellen.

Anhand der Kolbenstellung zum Druckabbau kann der Regler entscheiden, ob genügend Kammervolumen für den gleichzeitigen Druckabbau für beide Radbremsen bereit steht.

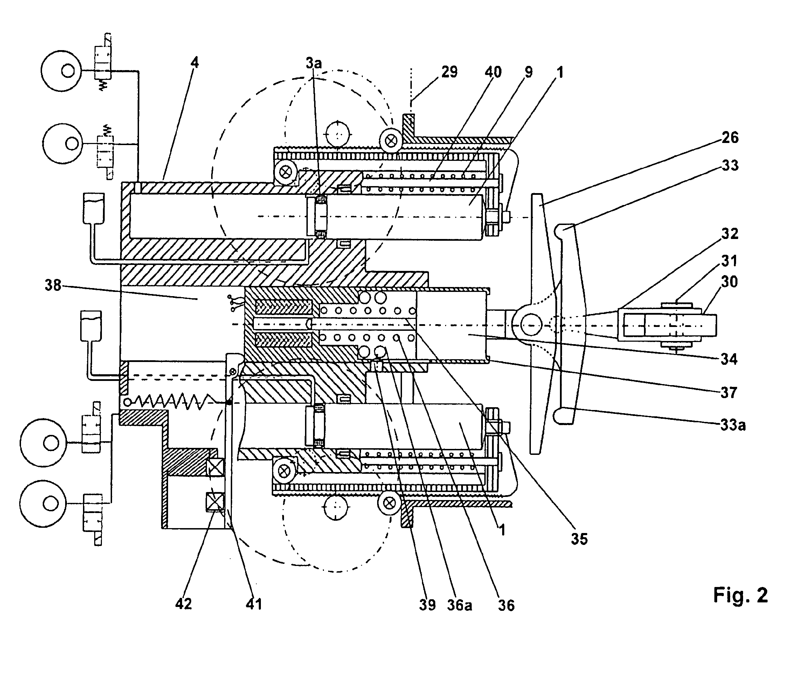

Die Fig. 2 zeigt die gesamte integrierte Einheit für BKV und Regelfunktionen. Die Einheit besteht aus zwei Kolbeneinheiten mit zugehörigem Elektromotoren und Getrieben gem. Fig. 1 für zwei Bremskreise und vier Radbremsen. Die Kolbeneinheiten sind im Gehäuse 4 untergebracht. Dieses Gehäuse ist an der Stirnwand 29 befestigt.

Das Bremspedal 30 überträgt die Pedalkraft und Bewegung über den Lagerbolzen 31 auf ein Gabelstück 32, welches über ein Kugelgelenk auf die Betätigungseinrichtung 33 wirkt. Diese hat einen zylinderförmigen Fortsatz 34 mit einer Stange 35.

Fortsatz 34 und Stange 35 sind in einer Buchse 37 gelagert. Diese nimmt die Wegsimulatorfedern 36 und 36a auf, wobei eine Feder schwach und die andere Feder stark progressiv im Kraftanstieg wirkt. Der Wegsimulator kann auch aus noch mehr Federn oder Gummielementen aufgebaut sein. Dieser gibt die Pedalkraftcharakteristik vor. Der Pedalweg wird von einem Sensor 38 erfasst, welcher im gezeichneten Beispiel nach dem Wirbelstromprinzip aufgebaut ist, in den die Stange 35 mit einem Target eintaucht.

Die Pedalbewegung wird auf die Elemente 32 und 33 übertragen, der Fortsatz 34 bewegt sich mit der Stange 35 in der Buchse 37. An der Betätigungseinrichtung ist ein Hebel 26 drehbar gelagert, welcher bei Ausfall der Energieversorgung auf die Kolben trifft. Der Pedalwegsensor liefert das Wegsignal zum elektronischen Steuergerät, welches entsprechend der BKV Kennlinie, eine Bewegung der Kolben über den Elektromotor bewirkt. Zwischen dem Hebel 26 und den beiden Kolben 1 ist ein Spiel Sₒ vorgesehen, wie in Fig. 1 dargestellt. Die Betätigungseinrichtung hat über den Bolzen 39, der versetzt dargestellt ist, eine Verdrehsicherung und eine Rückstellfeder 40, welche die nicht gezeichnete Pedalrückstellfeder unterstützt. Nach dem Stand der Technik sind viele Wegsimulatorlösungen bekannt, welche auch teilweise hydraulisch über Kolben betätigt werden und über Magnetventile abgesperrt werden, wenn die Energieversorgung ausfällt. Diese Lösung ist aufwändig und hysteresebehaftet. Auch sind Lösungen bekannt, bei denen der Wegsimulatorweg bei Ausfall der Energieversorgung als Verlustweg eingeht bei Betätigung der Kolben zur Bremsdruckerzeugung.

Ziel ist eine einfache Lösung, bei der bei Ausfall der Energieversorgung der Wegsimulator ausgeschaltet wird. Zu diesem Zweck wird auf die Buchse 37 bei intakter Energieversorgung über den Ankerhebel 41 mit großem Übersetzungsverhältnis und den Haltemagneten 42 eine Gegenkraft ausgeübt, die entfällt, wenn die elektrische Energieversorgung ausfällt. Zur Reduzierung des Magneten können auch zweistufige Hebel eingesetzt werden. Im einzelnen wird dies in Fig. 3 beschrieben. In diesem Fall kommt der Hebel über das Bremspedal mit den beiden Kolben nach Durchlaufen des Spiels so in Kontakt und kann somit die Pedalkraft auf die Kolben übertragen. Die Kolben sind so dimensioniert, dass sie bei vollem Pedalhub einen Druck erzeugen, welcher noch eine gute Bremswirkung ergibt, z. B. 80 %. Der Kolbenhub ist jedoch erheblich größer als der Pedalhub und kann bei intakter Energieversorgung und elektrischem Antrieb viel höhere Bremsdrücke erzeugen. Die entsprechende Pedalkraft kann jedoch der Fahrer nicht aufbringen. Man spricht bei dieser Auslegung von einem Übersetzungssprung, der mit Entkopplung der Betätigungseinheit mit Wegsimulator vom Kolben möglich ist. Bei konventioneller Bauweise, bei der BKV und Hauptbremszylinder mit Kolben hintereinander geschaltet sind, steigt die erforderliche Pedalkraft bei Ausfall der Energieversorgung bis zum Faktor 5 für denselben Radbremsdruck an. Bei der neuen Auslegung kann z. B. der Faktor auf 3 reduziert werden. Dieser Fall ist z. B. beim Abschleppen eines Fahrzeugs bei ausgefallener Batterie relevant.

Der Hebel 26 ist drehbar gelagert , damit er Toleranzen bei der Bewegung der Kolben berücksichtigen kann, z. B. infolge unterschiedlicher Entlüftung. Dieser Ausgleich kann auch begrenzt werden, so dass der Hebel auf einen Anschlag 33a der Betätigungseinrichtung zur Anlage kommt.

Es müssen jedoch noch weitere Fehlerfälle betrachtet werden.

### Ausfall eines Elektromotors.

In diesem Fall ist die Verstärkung und Regelung beim benachbarten intakten Kolbenantrieb voll wirksam. Über den Hebel 26 wird im ausgefallenen Kreis Bremsdruck erzeugt, nachdem er am Anschlag 33a anliegt. Hier kann zusätzlich noch die Verstärkerkennlinie des zweiten Kreises erhöht werden, was die erforderliche Pedalkraft reduziert. Dies kann jedoch auch ohne Anschlag erfolgen.

### Ausfall eines Bremskreises.

Hier fährt der Kolben 1 auf Anschlag im Gehäuse 4. Der intakte zweite Kreis ist voll wirksam. Es entsteht nicht wie bei konventionellen heutigen Systemen ein durchfallendes Pedal, welches den Fahrer bekanntlich sehr irritiert. Die Irritation kann auch zu einem vollen Verlust der Bremswirkung führen, wenn er das Pedal nicht durchtritt.

Die Fig. 3 beschreibt die Funktion der Wegsimulatorarretierung. Im Grenzfall kann der Fahrer hohe Pedalkräfte aufbringen, was die Arretierung über den Ankerhebel 41 aufbringen muss. Um zu vermeiden, dass der Magnet 42 mit Erregerspule 43 diese Kräfte voll aufbringen muss, greift das obere ballige Ende 41a des Hebels asymmetrisch an der Buchse 37 an. Wird nun das Pedal bis zum Auftreffen der Stange 35 auf den Boden 37b ausgelenkt, so bewirkt diese Hebelwirkung eine leichte Verdrehung der Buchse 37, was Reibung in der Führung erzeugt, wobei zusätzlich die Nase 37a sich am Gehäuse 4 abstützen kann. Somit kann die Magnetkraft relativ klein gehalten werden. Der Magnet wird außerdem als Haftmagnet 42 ausgelegt, so dass infolge des kleinen Luftspaltes eine kleine Halteleistung notwendig ist. Bei Ausfall der Energieversorgung wird der Ankerhebel 41 von der Buchse 37 in die strichpunktierte Position 41' ausgelenkt. Wenn die Betätigungseinrichtung 33 wieder in die Ausgangsstellung zurückgeht, bringt die Rückstellfeder 44 den Ankerhebel 41 wieder in Ausgangsstellung.

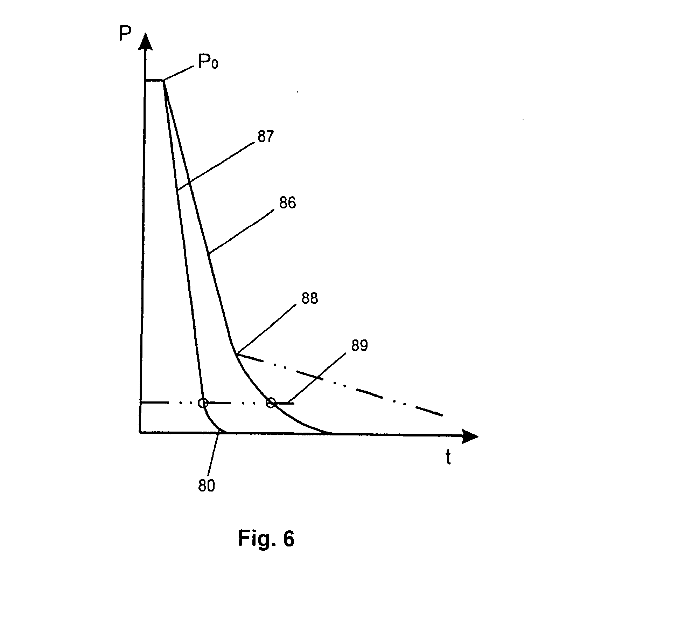

Der Sensor 38 wurde an das Ende der Bohrung der Buchse im Gehäuse 4 versetzt, was Vorteile für die Kontaktierung mit dem el. Steuergerät hat, wie dies in Fig. 6 dargestellt ist. Dasselbe gilt für den Bremslichtschalter 46. In diesem Ausführungsbeispiel ist das Target 45 für den Wirbelstromsensor gezeichnet.

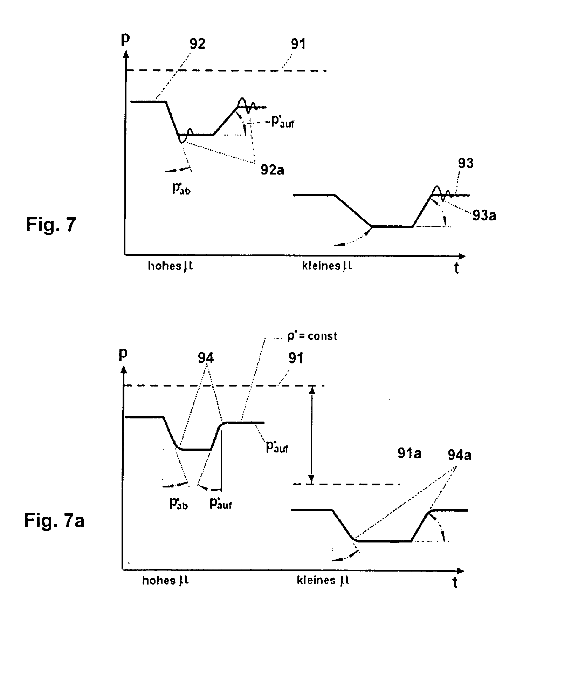

Die Arretierung des Wegsimulators über die Buchse 37 kann verändert werden, um die in Fig. 7 beschriebene Pedalrückwirkung bei ABS zu vermeiden. Hierzu kann der Hebel 41 mit seiner Lagerung und Magnet 42 mit Aufnahme 42a über einen Elektromotor 60 bewegt werden, der eine Spindel 60a über ein Getriebe 60b antreibt. An der Verlängerung der Spindel ist der Hebel gelagert und das Magnetgehäuse befestigt.

Die Fig. 4 zeigt eine prinzipielle Darstellung einer Lösung mit nur einem E-Motor 7a. Diese Beschreibung baut auf Fig. 1 und Fig. 2 auf. Das Antriebsritzel des Motors bewegt die Zahnstange 5c, welche ähnlich Fig. 1 auch parallel versetzt werden kann. Diese ist mit einem Kolben 1a verbunden, welcher Druck im Bremskreis 13a aufbaut und zugleich über den Druck den Kolben 1a verschiebt, der im Bremskreis 13 Druck aufbaut. Diese Kolbenanordnung entspricht einem konventionellen Hauptbremszylinder für dessen Kolben und Dichtungsausführungen viele Varianten existieren. In den Bremskreisen sind wie bei den vorstehenden Figuren die 2/2-Wege-Magnetventile 14, 14a, 15, 15a angeordnet. Die ABS Druckmodulation erfolgt in der zuvor beschriebenen Weise. Die BKV-Funktion erfolgt über einen parallel angeordneten Wegsimulation 36 und Wegsensor 38. Auch hier ist zwischen Kolben 1a und Bremspedal ein Spiel oder Leerhub s₀ vorgesehen. Die Bremsflüssigkeit gelangt vom Vorratsbehälter 18, 18a in die Kolbenkammern. Diese Anordnung ist kostengünstig. Die Dynamik der BKV-Funktion im Druckaufbau ist geringer als bei der Variante mit zwei Motoren, da der E-Motor das doppelte Moment aufbringen muss. Es entfällt außerdem die Redundanzfunktion des 2. Motors wie sie in Fig. 7 beschrieben ist, einschließlich eines durchfallenden Pedals bei Bremskreisausfall.

Im Primär-Bremskreis 13a ist ein Druckgeber 73b angeordnet. Dieser misst den entsprechenden Bremsdruck. Da der Druck dieses Kreises über den Kolben 1b auch auf den Sekundär-Bremskreis 13 wirkt, kann dieser Druckgeber 73b bei der Modulation beide Bremskreise erfassen, da bei der Druckmodulation für die ABS-Funktion jede Radbremse über die 2/2-Magnetventils 14, 14a, 15, 15a individuell geregelt werden kann. Damit kann sowohl der Druck als auch der Druckabbau jeder Radbremse gemessen werden.

In Fig. 4a besitzt jeder Bremskreis 13, 13a einen eigenen Antrieb 7a, 7b für die entsprechenden Druckmodulationskolben 1a und 1b. Im Unterschied zur Fig. 2 besitzt der antrieb 7b keine Verbindung zum Bremspedal 30. Vorzugsweise sind beide Antriebe parallel angeordnet damit eine kurze Baulänge erzielt werden kann. Der Vorteil dieser Anordnung liegt neben der kurzen Baulänge im einfacheren Aufbau und in der Modularität. Hierbei wird davon ausgegangen, dass für Kleinwagen bis zur gehobenen Mittelklasse das System entsprechend Fig. 4 eingesetzt wird und nur bei schweren Fahrzeugen ein einzelner Antriebsmotor nicht mehr genügt und deshalb in zwei Antriebe aufgeteilt wird. Abhängig von den Anforderungen kann in jedem Bremskreis vor den Magnetventilen ein Druckgeber eingesetzt werden.

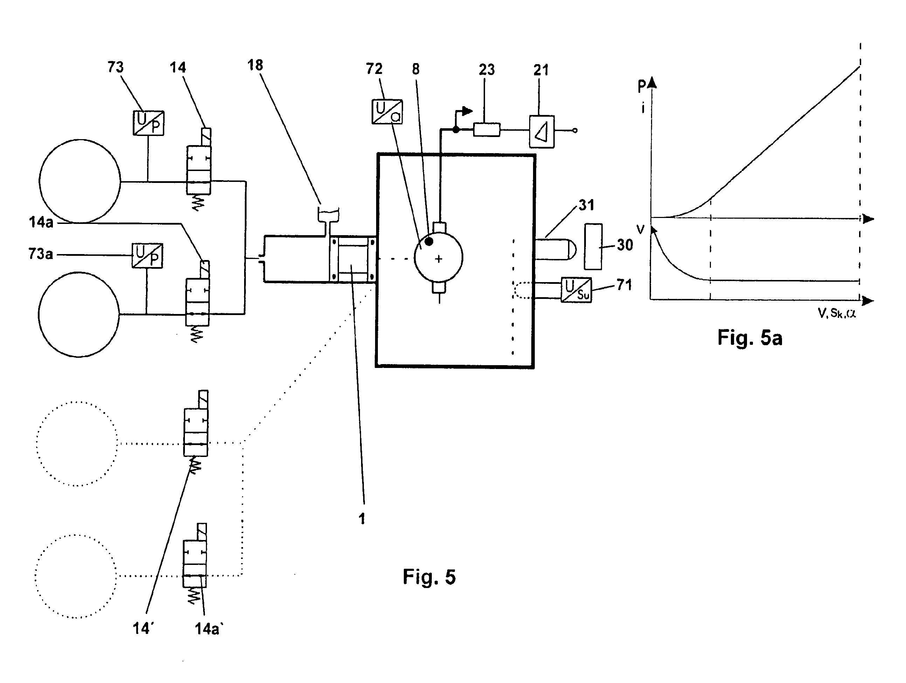

Fig. 5 zeigt die in den Figuren 1 und 2 beschriebene Druckmodulationseinrichtung, welche einen Elektromotor 8 enthält, der über den Shunt 23 zur druckproportionalen Strommessung über Endstufen 21 gesteuert wird. Letztere sind vereinfacht dargestellt. Der Kolbenweg wird. über einen Drehwinkelgeber 72 oder einen Kolbenwegsensor 71 erfasst, der auch zur Motorsteuerung bei einem EC-Motor genutzt wird. Dieser Motor betätigt den Kolben, welcher über die 2/2-Magnetventile 14, 14a das Druckmittel zu den entsprechenden Radbremsen bewegt. Der entsprechende Bremsflüssigkeitsbehälter 18 ist mit dem Kolbengehäuse verbunden. Es kann auch eine kostengünstige zentrale Betätigungseinrichtung für vier Radbremsen und zus. 2/2-Magnetventile 14' und 14a' verwendet werden. Zur Steuerung des Kolbens kann ein Kolbenwegsensor 71 oder ein Weg- oder Drehwinkelsensor zusammen mit Druckgebern 73 und 73a in den Radkreisen verwendet werden.

Bei ABS-, EHB- und ESP-Systemen sind die Magnetventile zur Druckregelung und zum Druckauf- sowie -abbau als Drosselventile aufgebaut (ATZ Automobiltechnische Zeitung 101 (1999) 4 S.224). Grundsätzlich möchte man den Druckaufbau- und Druckabbaugradienten 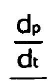 möglichst hoch gestalten, damit der Bremsmomentenüberschuss bei der Regelung schnell ausgeglichen wird. Allerdings besitzen die im Stand der Technik verwendeten Magnetventile Totzeiten, was bedeutet, dass nach dem Stellbefehl - z.B. Schließen - eine zusätzliche Druckänderung erfolgt. In der Regel ist diese annähernd 3 bar, wenn der Gradient 1500 bar/s beträgt und eine Schaltzeit von 2 ms vorliegt. Dieser Schließvorgang bewirkt u.a. auch Druckschwingungen, welche sich auf das Radverhalten auswirken und u.a. nachteilig Geräusche verursachen. Das bedeutet, dass die Magnetventile mit ihrer Schaltcharakteristik den maximalen Gradienten zum Druckab- bzw. Druckaufbau bestimmen. Durch den festen Drosselwiderstand der verwendeten Ventile ist der Druckauf- und Druckabbaugradient stark nicht linear und folgt ungefähr der Funktion 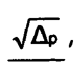 wobei Δₚ der Differenzdruck ist. Für eine optimale und einfache Regelung ist jedoch ein variabler und konstanter Druckgradient vorteilhaft.

Wichtig ist dass der Aufbau und die Dimensionierung der 2/2-Magnetventile dergestalt ist, dass sie nahezu keine Drosselwirkung besitzen, so dass die Betätigungseinrichtung den Druckgradient. bestimmt. Vorzugsweise werden druckentlastete Sitzventile mit geringer Temperaturabhängigkeit eingesetzt.

Wesentlich für die erfindungsgemäßen Gradientensteuerung ist die Kenntnis der Druckvolumenkennlinie der Radbremse wie sie in Fig. 5a dargestellt ist. Im oberen Teil ist die Abhängigkeit von Druck (Strom) über Volumenaufnahme, welche sich proportional zum Kolbenweg oder Drehwinkel α verhält dargestellt. Diese ist bekanntlich nicht linear. Für eine konstante Druckgradientenregelung muss die Druckvolumenkennlinie für eine entsprechende Geschwindigkeitssteuerung des Kolbens ausgewertet werden.

Für das Verfahren, bei dem von einer zentralen Betätigungseinrichtung mehrere Regelungskanäle bedient werden, ist es von großer Bedeutung, die Verweilzeit auf einem Regelungskanal so klein wie nur möglich zu gestalten, da in dieser Zeit die anderen Regelungskanäle nicht bedient werden. Hierbei ist ein schneller Druckgradient insbesondere im Druckabbau und eine kurze Schaltzeit der 2/2-Magnetventile von großer Bedeutung. Dies wird in den folgenden Figuren noch detailliert beschrieben.

Fig. 6 beschreibt den Druckabbau von einem Niveau P₀, welches z.B. der Blockiergrenze von trockener Straße entspricht. Bei einem µ-Sprung auf Eis oder Aquaplaning muss das Druckniveau auf das Niveau von Linie 89 abgebaut werden. Bei den eingangs erwähnten Systemen erfolgt der Druckabbau entsprechend der Linie 86 nicht linear mit sehr kleinen Gradienten bei niedrigem Druckniveau. Bei Systemen mit Speicherkammer nach dem Stand der Technik füllt sich bei diese bei 88. Der gestrichelte sehr langsame Druckverlauf wird durch die Leistung der Rückförderpumpe bestimmt. Dagegen bewirkt das System entsprechend dem Erfindungsvorschlag einen nahezu konstanten Gradienten - Linie 87, der konstruktionsbedingt größer bzw. höher gewählt werden kann als bei konventionellen Systemen (Linie 86). Lediglich im unteren Verlauf bei sehr kleinen Drücken 80 ist ein Übergangsbereich, bedingt durch die Stellgeschwindigkeit des Kolbens, vorhanden. Entscheidend für diesen vorteilhaften Druckabbau ist die Dimensionierung der Magnetventile und Rohrleitungen, welche auch bei tiefen Temperaturen für die entsprechenden Druckgradienten keinen nennenswerten Strömungswiderstand bilden sollten, so dass nur die Verstellgeschwindigkeit des Kolbens dominant ist. Für das Bremsrohr kann ein größerer Durchmesser verwendet werden, oder alternativ könnte das Bremsrohr elektrisch beheizt werden.

Fig. 7 zeigt den Druckabbau und Druckaufbau auf der linken Seite bei hohem und auf der rechten Seite bei niedrigem µ. Die gestrichelte Linie soll dem sog. Vordruck 91 entsprechen, welchen der Fahrer im Hauptzylinder erzeugt. Der Druckabbaugradient p_{ab}/dt hängt, wie bereits dargelegt, vom Druckniveau ab und der Aufbaugradient pₐᵤ/dt vom Differenzdruck zum Vordruck. Insbesondere bei Regelung mit niedrigem Druckniveau entstehen hohe Differenzdrucke und damit hohe pₐᵤ/dt. Die Ventile werden zu einem treppenförmigen Druckaufbau getaktet. Dies erzeugt durch den schnellen Schließvorgang des Magnetventils Druckschwingungen 92a und 93a, die erhebliche Geräusche verursachen und sogar auf das Radverhalten einwirken.

Fig. 7a zeigt das Druckzeitverhalten bei hohem und niedrigem µ beim neuen System. Die Druckgradienten p_{ab}/dt und pₐᵤ/dt können unabhängig vom Druckniveau gleich sein. Der Druckaufbaugradient pₐᵤ/dt kann innerhalb des Regelzyklus unterschiedlich sein, z.B. beim ersten Druckaufbau pₐᵤ₁ groß und beim zweiten Druckaufbau pₐᵤ₂ kleiner.

Durch die variablen Druckgradienten kann im Druckabbau und Druckaufbau ein Übergangsbereich 94 und 94a geschaffen werden, welcher Druckschwingungen vermeidet. Auch kann der Vordruck des Systems durch entsprechende Steuerung des Betätigungsgliedes so gesteuert werden, dass der Vordruck 20 % höher als der maximale geregelte Druck liegt. Dies spart entsprechend elektrische Energie zur Ansteuerung des Betätigungsgliedes.

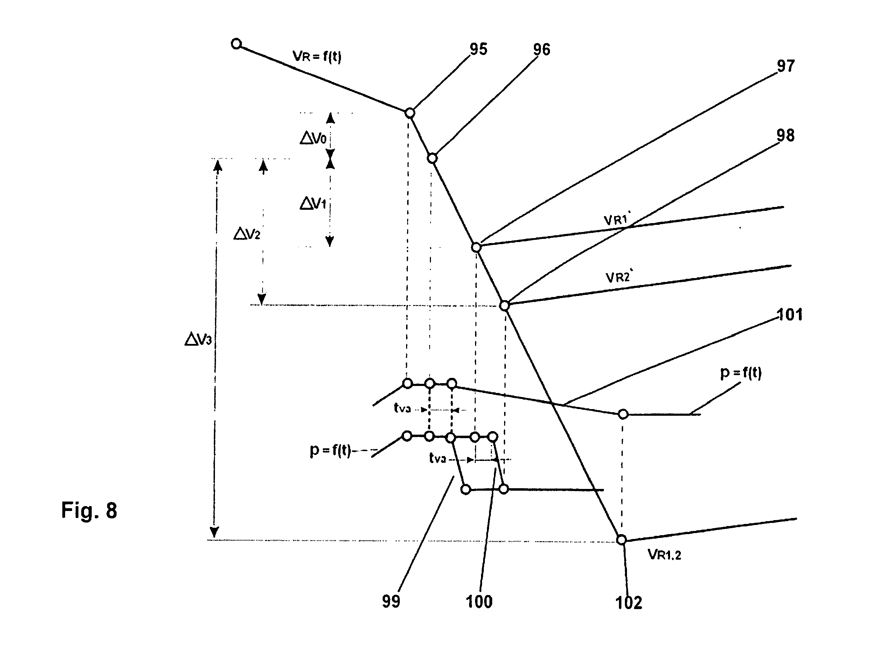

Fig. 8 zeigt den zeitlichen Verlauf von Radgeschwindigkeit und Druck. Die Verläufe sind stark linearisiert. Beim Bremsvorgang bewegt sich die Radgeschwindigkeit bis zum Punkt 95, bei dem die Blockierungsgrenze überschritten wird, was sich dadurch äußert, dass die Radbeschleunigung 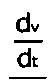 zunimmt. Bevor der Druckabbau einsetzt wird eine Differenzgeschwindigkeit ΔV₀ abgewartet. Es bietet sich an, in dieser Phase den Druck konstant zu halten. Zum Zeitpunkt 96 erfolgt der Druckabbau entsprechend dem Verlauf 101 beim konventionellen System. Dieses erfolgt nach einer Totzeit von t_{VA}. Hier ist der kleine Gradient entsprechend klein µ gezeichnet. Zum Zeitpunkt 102 ist der Momentenüberschuss, welcher die Blockierneigung bewirkt, durch entsprechenden Druckabbau ausgeglichen. Die Radgeschwindigkeit V_{R1,2} nimmt wieder zu, so dass die Blockierneigung verschwindet. Es wird zur Vereinfachung angenommen, dass beide Radgeschwindigkeiten bei Betrachtung des konventionellen Systems synchron verlaufen und gleichzeitig geregelt werden. Es stellt sich hierbei die sog. Regelabweichung ΔV₃ beim konventionellen System ein.

Beim erfindungsgemäßen System setzt ebenfalls bei Zeitpunkt 96 nach t_{VA} der vorteilhaft schnelle Druckabbau ein, welcher bei 97 beendet wird und eine viel kleinere Regelabweichung ΔV₁ entsteht, nach der das erste Rad nicht mehr blockiert (vᵣ₁' nimmt wieder zu). Nun wird auf den zweiten Regelkanal umgeschaltet, was nach t_{VA} zum Druckabbau führt, der zum Zeitpunkt 98 beendet ist. Hierbei entsteht eine Regelabweichung ΔV₂, welche trotz der versetzten Regelung immer noch kleiner ist als beim konventionellen System mit ΔV₃.

Im ersten Regelzyklus kann auch beim neuen System bei beiden Rädern gleichzeitig der Druckabbau erfolgen, wenn beide Räder instabil werden und Punkt 95/96 überschreiten, weil das Ausgangsdruckniveau gleich ist. Dies ist von großer Bedeutung, da beim Anbremsen bei hoher Druckanstiegsgeschwindigkeit der Momentenüberschuss größer ist als bei den folgenden Regelzyklen, bei der durch treppenförmigen Druckaufbau der mittlere Druckanstieg erheblich kleiner ist.

Wie dargestellt, entstehen beim konventionellen System im ersten Regelzyklus um den Faktor 2 bis 3 größere Regelabweichungen, was bekanntlich Bremsweg und Seitenkraftverlust bedeutet.

Die vorstehenden Darstellungen zeigen, dass für den Fall der gleichzeitigen Instabilität und des zeitversetzten Druckabbaus wichtig ist, diesen Zeitversatz möglichst gering zu halten. Anzumerken ist jedoch, dass dieser Fall in der Praxis selten auftaucht.

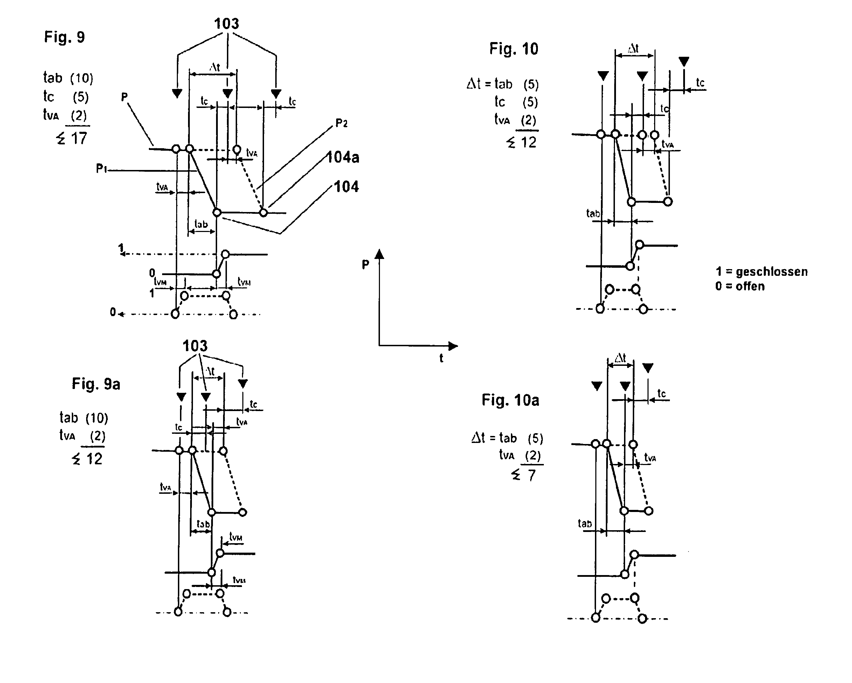

Die Figuren 9 und 10 zeigen die wesentlichen Einflussparameter auf den Zeitversatz. Gezeigt ist der zeitliche Druckverlauf, linearisiert dargestellt.

### Die Abkürzungen bedeuten:

- t_{VA}:: Verzugs- oder Totzeit von Betätigungseinrichtung oder Aktuator
- t_{VM}:: Verzugszeit 2/2-Magnetventil
- t_{c}:: Abtastzeit oder Abtastrate vom Computer; dieser benötigt diese Zeit, um bei Umschaltung von einem zum nächsten Rad die Geschwindigkeit zu berechnen
- t_{ab}:: Druckabbauzeit
- Δt:: Zeitversatz

In Fig. 9 erfolgt bei 103, mit Dreieck gekennzeichnet, vom Regler der Stellbefehl zum Druckabbau, der nach t_{VA} erfolgt und nach t_{ab} abgeschlossen ist. In dieser Phase wird der gestrichelt gezeichnete zweite Regelkanal im Druck konstant gehalten durch Schließen der 2/2-Magnetventile. Nach t_{ab} bei 104 wirkt t_{c} gleichzeitig 2 x t_{VM}. Nach t_{VA} bzw. parallel Öffnen der 2/2-Magnetventile über t_{VM} erfolgt der nächste p_{ab} und nach erneutem t_{c} die nächste Druckänderung, was Druckauf- oder - abbau bewirken kann. Zu beachten ist, dass der Druckaufbau weniger kritisch ist, da die Zeit Faktor 10 - 20 größer ist als t_{ab} im Regelzyklus, da viele Phasen konstanten Druckes, s. Fig. 7a, eingeschaltet werden. Fig. 9 hat bei quantitativer Betrachtung von Δt = 17 ms als Zeitversatz zur Folge.

Fig. 9a zeigt eine Möglichkeit, Δt zu verkürzen. Bei 103 erfolgt wieder der Stellbefehl. Hierbei wird während t_{VA} der notwendige Druckabbau berechnet, vorwiegend aus Radbeschleunigung und Radträgheitsmoment, so dass nach t_{VA} der Computer auf den nächsten Regelkanal umgeschaltet wird, so dass nach t_{ab} und to bzw. t_{VM} bereits Δt erreicht ist für den nächsten Druckabbau. Hierbei wird, wie links dargestellt , Δt von 17 auf 12 ms reduziert.

Figuren 10 und 10a entsprechen den Figuren 9 bzw. 9a, mit dem Unterschied, das t_{ab} um den Faktor 2 kleiner gewählt ist, was zur Folge hat, dass mit dem Verfahren nach Fig. 9a Δt von 17ms auf 7ms reduziert werden kann. Dies ist ein so kleiner Wert, so dass der Zeitversatz vernachlässigbar in die Regelabweichung eingeht und ermöglicht, mit einem Aktuator vier Regelkanäle zu bedienen. Weiteres Potenzial ist nutzbar in der Verkürzung der Verzugs- oder Totzeiten t_{VA} und t_{VM}.

Wie dargestellt, bestimmt t_{VA} und die Druckabbaugeschwindigkeit maßgeblich die Umschaltzeit Δt, d.h. t_{VA} sollte klein sein und die Druckabbaugeschwindigkeit möglichst groß.

Die Totzeit der 2/2-Magnetventile kann in gewissen Grenzen schwanken, da ein kleiner Schaltverzug beim Druckabbau sich nicht bemerkbar macht, da der Kolben bereits über das Regelsignal bewegt wird. Sobald das Magnetventil öffnet, strömt die Flüssigkeit praktisch ohne Drosselung in die Kolbenkammer. Das Ende des Druckabbaus ist aus dem Kennfeld erkennbar und kann zum entsprechenden Vorhalt berücksichtigt werden. Beim Druckaufbau erfolgt die Ansteuerung des EC-Motors etwas früher als die erwartete Öffnungszeit des Magnetventils. Aus dem Anlauf des Motors ist erkennbar, wie die Öffnungszeit liegt, da erst bei offenem Ventil Druckmittel zu den Bremsen gelangt und der Kolben sich bewegen kann. Ggf. muss die Ansteuerzeit korrigiert werden. Ähnlich kann die Schließzeit überprüft werden.

Der Zeitpunkt des Endes des Druckaufbaus ist aus dem Ansteueralgorithmus und dem Kennfeld bekannt. Wird der vorgesehene Druckaufbau nicht erreicht, so schließt das Magnetventil zu früh und deren Ansteuerzeit erfährt eine Korrektur für späteres Schließen. Der Motor/Kolben verharrt nach Erreichen des Druckaufbaues eine kleine Zeit, um sicher zu sein, dass das Magnetventil geschlossen ist.

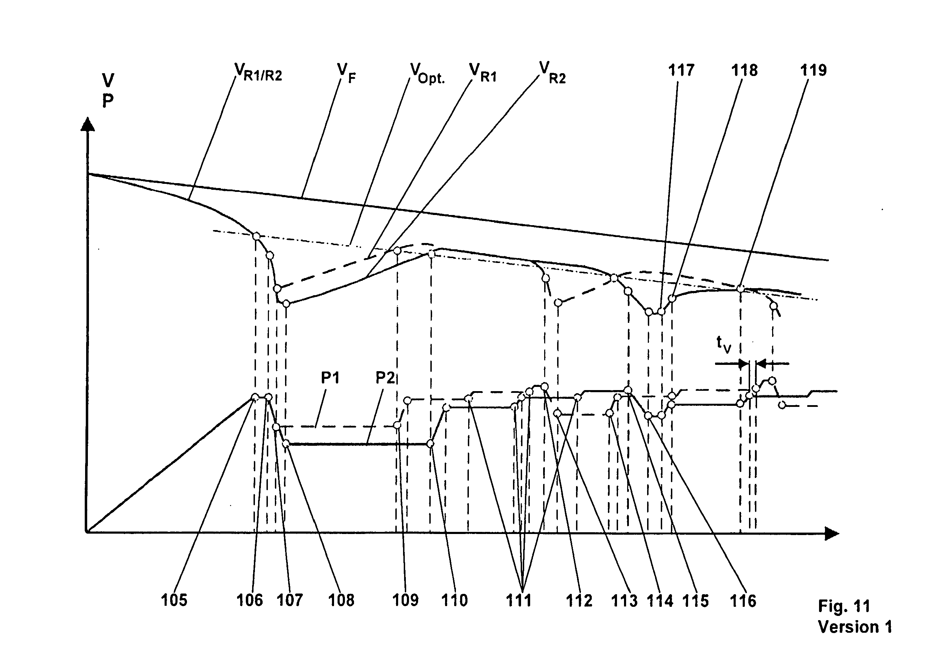

Die Figur 11 beschreibt den zeitlichen Ablauf mehrerer Regelzyklen. Gezeigt ist der Geschwindigkeitsverlauf zweier Räder V_{R1} und V_{R2} mit zugehörigem Druckverlauf p₁ und p₂. Gezeigt wird der Druckanstieg. Hier bildet sich bekanntlich eine Differenzgeschwindigkeit von V_{R1} und V_{R2} zur Fahrzeuggeschwindigkeit V_{F}. Man spricht hier von Schlupf. Eingezeichnet ist die sog. Geschwindigkeit für optimale Reibung Vₒₚₜ , die in der Regel einen Schlupf von 10 % hat, aber auch z. B. zwischen 5 % und 30 % schwanken kann. D.h. Vₒₚₜ ist z. B. in der Regel 90 % von V_{F}. Nach dem Druckanstieg wird bei 105 Vₒₚₜ überschritten, und nach Ablauf von Δᵥ (s. Fig. 8) wird im ersten Regelzyklus an beiden Rädern Druck abgebaut, da beide gleiches Druckausgangsniveau haben und Vₒₚₜ überschreiten. Nach dem Verfahren gem. der Figuren 9a bzw. 10a wird hier vorzugsweise proportional zu Radbeschleunigung und Trägheitsmoment ein Druckabbau eingeleitet, welcher bei V_{R1} und V_{R2} unterschiedlich ist.

Dieser Rechenvorgang läuft unabhängig von der Berechnung der Radgeschwindigkeit bzw. Beschleunigung. Die Daten für den Druckabbau können z. B. in einem Kennfeld abgelegt sein, so dass keine nennenswerte Rechenleistung / Zeit notwendig ist. Zum Zeitpunkt 107 ist bei V_{R1} und 108 bei V_{R2} der Druckabbau beendet. Dieser wird jeweils so festgelegt, dass das Reibmoment am Rad größer als das Bremsmoment ist, so dass eine Radwiederbeschleunigung entsteht. Zum Zeitpunkt 109 wird bei V_{R1} Vₒₚₜ und bei V_{R2} bei 110 überschritten. Hier erfolgt ein Druckaufbau, dessen Betrag wiederum proportional zur Radbeschleunigung und Radträgheitsmoment folgt, im Vergleich zum Druckabbau etwas reduziert z. B. 90 %.

Nach Phasen der Druckkonstanthaltung über z.B. 30 ms erfolgt jeweils bei 101 ein kleiner Druckaufbau von wenigen Bar. Dieser kann jedoch höher gewählt werden, wenn sich das Rad bei kleinen Schlupfwerten befindet.

Zum Zeitpunkt 112 erfolgt bei V_{R1} der nächste Druckabbau bis 113. Bei 114 erfolgt identisch zu 109 und 110 der Druckaufbau, bei 115 und 116 Druckabbau bei V_{R2}. Zum Zeitpunkt 119 fallen der größere Druckaufbau entsprechend 110 und der kleinere Druckaufbau entsprechend 111 zusammen. Priorität hat hierbei der große Druckaufbau, der kleine erfolgt, um tᵥ versetzt. Zum Zeitpunkt 117 zeigt sich bei V_{R2} bereits bei größerem Schlupf eine große Radbeschleunigung. Dies hat zur Folge, dass nach den Bedingungen von 100 Druck aufgebaut wird. Bei 119 erfolgt nochmals dasselbe.

Bei dieser Darstellung wurden die Verzögerungszeiten t_{VA} und t_{VM} und Rechenzeit t_{c} nicht berücksichtigt zugunsten einer übersichtlichen Darstellung.

Unter dem Begriff "Regelzyklus" wird im Sinne dieser Erfindung der Regelvorgang gemeint, der nach Unterschreiten der Geschwindigkeit für optimale Reibung oder Überschreitung eines entsprechenden Schlupfwertes, siehe Punkt 105 bzw. 106 der Figur 11, die Druckabsenkung eingeleitet wird. Das Ende des "Regelzyklus" ist gegeben, siehe Punkt 109 bzw. 110 der Figur 11, wenn die Geschwindigkeit für die optimale Reibung überschritten oder der Schlupfwert wieder unterschritten wird. Ein "Regelzyklus" für eine Radbremse besteht somit stets aus einer Phase, in der Druck auf- bzw. abgebaut wird und einer sich daran anschließenden Phase, in der der Druck konstant gehalten wird.

## Patentansprüche

1. Bremsanlage, welche eine Betätigungseinrichtung (30), insbesondere ein Bremspedal, sowie eine Steuer- und Regeleinrichtung (22) aufweist, die anhand der Bewegung und/oder Position der Betätigungseinrichtung (30) mindestens eine elektromotorische Antriebsvorrichtung (8) steuert, und die Antriebsvorrichtung (8) einen Kolben (1a) eines Kolben-Zylinder-Systems über eine nichthydraulische Getriebevorrichtung verstellt, so dass sich im Arbeitsraum (4a', 4b') des Zylinders (4) ein Druck einstellt, wobei der Kolben (1a) zusammen mit einem hydraulisch gekoppelten weiteren Kolben (1b) in einem Zylinder angeordnet ist, d.h. Tandem-Kolben-Zylinder, und dass jeder Arbeitsraum (4a', 4b') des Tandem-Kolben-Zylinders über mindestens eine Druckleitung (13, 13a) mit mindestens einer Radbremse in Verbindung ist, wobei zwischen dem Bremszylinder jeder Radbremse und einem Arbeitsraum (4a', 4b') des Kolben-Zylinder-Systems ein Ventil (14, 14a, 15, 15a) angeordnet ist, und die Steuer- und Regeleinrichtung (22) das Ventil (14, 14a, 15, 15a) zum Druckab- oder Druckaufbau im Bremszylinder öffnet und zum Halten des Drucks im Bremszylinder schließt, und dass die Bremsanlage einen Druckgeber bzw. einen Drucksensor (73b) zur Erfassung des Drucks in einem von zwei Bremskreisen bzw. deren Druckleitungen (13, 13a), insbesondere im Primärbremskreis, aufweist, wobei die Steuer- und Regeleinrichtung (22) mittels des angetriebenen Kolbens (1a) gleichzeitig oder nacheinander den Druck in einem oder mehreren Bremszylindern mittels des Kolben-Zylinder-Systems und der den Radbremsen zugeordneten Ventile (14, 14a, 15, 15a) einregelt, **dadurch gekennzeichnet, dass** das Kolben-Zylinder-System gleichsam für den Bremsdruckaufbau und Bremsdruckabbau für den Bremskraftverstärker sowie zur Realisierung der ABS- und Antischlupfregelung dient, und die Steuer und Regeleinrichtung den Druckauf- und Druckabbau und die Änderungsgeschwindigkeit des Druckaufbaus und des Druckabbaus in den Radbremsen in Abhängigkeit des Fahrzustandes oder der Bremsregelung des Fahrzeuges oder des jeweiligen abzubremsenden Rades mittels des Kolben-Zylinder-Systems und durch Auswertung der Druckvolumenkennlinie der Radbremsen über den Kolbenweg, den Strom des Elektromotors oder den mittels des Druckgebers bzw. Drucksensors (73b) ermittelten Druck eingeregelt.

2. Bremsanlage nach einem der Ansprüche 1, **dadurch gekennzeichnet, dass** die Betätigungseinrichtung (30) bei Ausfall der Antriebsvorrichtung (8) den Kolben (1a) des Kolben-Zylinder-Systems direkt oder über ein Getriebe verstellt.

3. Bremsanlage nach einem der Ansprüche 1 oder 2, **dadurch gekennzeichnet, dass** die Bremsanlage zwei parallel zueinander angeordnete Kolben-Zylinder-Systeme aufweist, und jedem Kolben eine Antriebsvorrichtung zugeordnet ist, die den jeweils zugehörigen Kolben verstellt.

4. Bremsanlage nach einem der Ansprüche 1 bis 3, **dadurch gekennzeichnet, dass** die den Arbeitsraum (4a', 4b') des Kolben-Zylinder-Systems mit dem Bremszylinder verbindenden Hydraulikleitungen (13, 13a) einen vernachlässigbaren Strömungswiderstand aufweisen.

5. Bremsanlage nach Anspruch 4, **dadurch gekennzeichnet, dass** das Ventil (14, 14a, 15, 15a) einen großen Strömungsquerschnitt aufweist, derart, dass das Ventil (14, 14a, 15, 15a) keine Drosselfunktion hat, wobei das Ventil (14, 14a, 15, 15a) insbesondere ein 2/2-Schieberventil ist.

6. Bremsanlage nach einem der vorhergehenden Ansprüche, **dadurch gekennzeichnet, dass** die Steuer- und Regeleinrichtung (22) eine Wissensdatenbank, insbesondere in Form eines Kennfeldes aufweist, die insbesondere adaptiv ausgebildet ist.

7. Verfahren zur Einstellung eines Drucks in mindestens einem Bremszylinder einer Bremsanlage nach einem der vorhergehenden Ansprüche, **dadurch gekennzeichnet, dass** wahlweise gleichzeitig oder nacheinander der Druck in einem oder mehreren Bremszylindern mittels des mindestens einen Kolben-Zylinder-Systems und der den Radbremsen zugeordneten Ventilen eingeregelt wird, wobei die Änderungsgeschwindigkeit des Druckaufbaus und/oder des Druckabbaus in den Radbremsen in Abhängigkeit des Fahrzustandes oder der Bremsregelung des Fahrzeuges oder des jeweiligen abzubremsenden Rades mittels des Kolben-Zylinder-Systems eingeregelt wird.

8. Verfahren nach Anspruch 7, **dadurch gekennzeichnet, dass** sich die Änderungsgeschwindigkeit des Druckaufbaus und/oder des Druckabbaus in einer Radbremse während eines Regelzyklus ändert.

9. Verfahren nach Anspruch 8, **dadurch gekennzeichnet, dass** sich die Änderungsgeschwindigkeit des Druckabbaus und/oder Druckaufbaus während der Zeit in der ein Ventil (14, 14a, 15, 15a) einer Radbremse geöffnet ist ändert, insbesondere anfänglich hoch ist und gegen Ende der Druckabbau- oder Druckaufbauphase verringert wird.

10. Verfahren nach einem der Ansprüche 7 bis - 9, **dadurch gekennzeichnet, dass** die Steuer- und Regeleinrichtung (22) zumindest aus der jeweiligen Radgeschwindigkeit, der Fahrzeugbeschleunigung und dem im jeweiligen Bremszylinder der Radbremse befindlichen Druck den erforderlichen Druckaufbau, Druckabbau, die Druckhaltephasen und/oder den optimalen Schlupf für das jeweilige Rad bzw. alle gebremsten Fahrzeugräder ermittelt.

11. Verfahren nach einem der Ansprüche 7 bis 10, **dadurch gekennzeichnet, dass** die Steuer- und Regeleinrichtung (22) während des Druckaufbaus bzw. Druckabbaus für eine erste Radbremse das der Radbremse zugehörige Ventil (14, 14a, 15, 15a) öffnet, und unmittelbar nach dem Einstellen des vom Regler bestimmten Drucks für die erste Bremse das der ersten Radbremse zugehörige Ventil (14, 14a, 15, 15a) schließt und durch Öffnen des Ventils für die zweite Radbremse den notwendigen Druck für die zweite Radbremse mittels des Kolben-Zylinder-Systems einregelt.

12. Verfahren nach Anspruch 11, **dadurch gekennzeichnet, dass** der notwendige Druckabbau bzw. Druckaufbau für das als nächstes einzugregelnde Rad insbesondere anhand der gemessenen Radbeschleunigung und dem Radträgheitsmoment, insbesondere aus dem Kennfeld, berechnet wird.

13. Verfahren nach einem der Ansprüche 7 bis 12, **dadurch gekennzeichnet, dass** der Druckabbau bei zwei Radbremsen durch Öffnen der jeweils zugehörigen Ventile (14, 14a, 15, 15a) zur gleichen Zeit erfolgt, insbesondere wenn in den Bremszylindern der beiden Radbremsen anfänglich ungefähr das gleiche Druckniveau herrscht oder im ersten Regelzyklus eines Bremsvorganges.

14. Verfahren nach Anspruch 13, **dadurch gekennzeichnet, dass** das Ventil (14, 14a, 15, 15a) für ein erstes Rad eher geschlossen wird als das Ventil (14, 14a, 15, 15a) des zweiten Rades.

15. Verfahren nach einem der Ansprüche 7 bis 14, **dadurch gekennzeichnet, dass** die Steuer- und Regeleinrichtung (22) einen Speicher hat, in dem der zum Zeitpunkt des Schließens des zugehörigen Ventils einer Radbremse eingeregelte Druck und/oder das Drucksignal, wie z.B. Motorstrom oder Kolbenstellung, abgelegt wird.

16. Verfahren nach einem der Ansprüche 7 bis 15, **dadurch gekennzeichnet, dass** während der Regelung mittels des Kolben-Zylinder-Systems ein Vordruck einregelt wird, der ca. 10-30%, insbesondere 20% über dem einzuregelnden Druck liegt.

17. Verfahren nach einem der Ansprüche 7 bis 16, **dadurch gekennzeichnet, dass** der Motor bzw. Kolben nach Erreichen des Druckaufbaues eine kurze Zeit in seiner Position gehalten wird, um sicher zu stellen, dass das zuletzt geöffnete Magnetventil (14, 14a, 15, 15a) vollständig geschlossen ist.

18. Verfahren nach einem der Ansprüche 7 bis 17, **dadurch gekennzeichnet, dass** die Ansprechzeit (t_{VA}) der Antriebseinrichtung klein zur Erzielung einer großen Druckabbaugeschwindigkeit (dp_{ab}/dt) und/oder Druckaufbaugeschwindigkeit (dpₐᵤ/dt) ist, insbesondere derart, dass die Druckänderungsgeschwindigkeit größer 1500 bar pro Sekunde ist.

19. Verfahren nach einem der Ansprüche 7 bis 18, **dadurch gekennzeichnet, dass** das die Druckabbaugeschwindigkeit (dp_{ab}/dt) sehr groß gewählt bzw. eingeregelt wird, sofern mehrere Räder gleichzeitig vom Regler zum Druckabbau bestimmt sind.

20. Verfahren nach einem der Ansprüche 7 bis 19, **dadurch gekennzeichnet, dass** der Regler den optimalen Druck zur Erzielung des optimalen Schlupfes für das gebremste Rad berechnet und der Druckaufbau für die zugehörige Radbremse bis zu einem Druck erfolgt, der geringfügig kleiner, insbesondere 1-20%, vorzugsweise 5-10% kleiner ist, als der berechnete optimale Druck, derart, dass ein erneutes Überschreiten des optimalen Schlupfes vermieden wird.

21. Verfahren nach Anspruch 20, **dadurch gekennzeichnet, dass** zur Erzielung eines möglichst optimalen Schlupfes der Druckaufbau in Schritten erfolg, wobei zuerst ein großer Druckanstieg nach dem Regelzyklus erfolgt, gefolgt von Druckhaltephasen im Wechsel mit Druckaufbauphasen mit jeweils geringen Druckänderungen.

22. Verfahren nach Anspruch 21, **dadurch gekennzeichnet, dass** während einer Druckhaltephase für ein erstes Rad eine Druckaufbauphase für ein zweites Rad mittels des selben Kolben-Zylinder-Systems eingeleitet bzw. durchgeführt wird.

23. Verfahren nach einem der Ansprüche 7 bis 22, **dadurch gekennzeichnet, dass** die Ventile (14, 14a, 15, 15a) als 2/2-Wege-Ventile ausgebildet sind, und dass die Regeleinrichtung bei der Ansteuerung der 2/2-Wege-Ventile (14, 14a, 15, 15a) deren Ansprechzeiten bzw. Totzeiten berücksichtigt, derart, dass die 2/2-Wege-Ventile um die Ansprechzeit des Ventils früher einen Befehl zum Öffnen oder Schließen erhalten, so dass das Ventil (14, 14a, 15, 15a) zum berechneten Zeitpunkt tatsächlich geöffnet bzw. geschlossen ist.

24. Verfahren nach Anspruch 23 **dadurch gekennzeichnet, dass** die 2/2-Wege-Ventile (14, 14a, 15, 15a) steuernde Regeleinrichtung (22) aus der Reaktion der aktivierten Antriebseinrichtung oder dem erfolgten Kolbenverstellweg nach entsprechender Ansteuerung die Ansprechzeit der Ventile (14, 14a, 15, 15a) ableitet und für die nachfolgende Regelung in einem Speicher abspeichert.

25. Verfahren nach einem der Ansprüche 7 bis 24, **dadurch gekennzeichnet, dass** zum Druckaufbau bzw. Druckabbau in mindestens einer Radbremse der Kolben des Kolben-Zylinder-Systems bereits verstellt wird, und das bzw. die zugehörige(n) Ventile (14, 14a, 15, 15a) später öffnet bzw. öffnen.

## Claims

1. Braking system which has an actuating device (30), in particular a brake pedal, and a control and regulating device (22) which on the basis of the movement and/or position of the actuating device (30) controls at least one electromotive drive device (8), and wherein the drive device (8) moves a piston (1a) of a piston-cylinder system via a non-hydraulic transmission mechanism, so that pressure develops in the working chamber (4a', 4b') of the cylinder (4), wherein the piston (1a) is arranged together with another hydraulically coupled piston (1b) in a cylinder, i.e. a tandem piston cylinder, wherein each working chamber (4a', 4b') of the tandem piston cylinder is connected to at least one wheel brake via at least one pressure line (13, 13a), wherein a valve (14, 14a. 15, 15a) is arranged between the brake cylinder of each wheel brake and a working chamber (4a', 4b') of the piston-cylinder system, and wherein the control and regulating device (22) opens the valve (14, 14a, 15, 15a) to reduce or build up pressure in the brake cylinder and closes it to maintain the pressure in the brake cylinder, and wherein the braking system has a pressure transducer or pressure sensor (73b) for measuring the pressure in one of two brake circuits or their brake lines (13, 13a), in particular in the primary brake circuit, wherein the control and regulating device (22) by means of the driven piston (1a) simultaneously or successively adjusts the pressure in one or a plurality of brake cylinders by means of the piston-cylinder system and the valves (14, 14a, 15, 15a) assigned to the wheel brakes, **characterised in that** the piston-cylinder system serves, as it were, to build up and reduce brake pressure for the brake servo and to execute ABS and anti-slip control and the control and regulating device adjusts the pressure build-up and pressure reduction and the rate of change in the pressure build-up and pressure reduction in the wheel brakes by means of the piston-cylinder system as a function of the driving state or of the brake regulation of the vehicle or of the respective wheel to be braked and by evaluating the pressure-volume characteristic curve of the wheel brakes via the piston travel, the current of the electric motor or the pressure determined by means of the pressure transducer or pressure sensor (73b).

2. Braking system according to Claim 1, **characterised in that** when there is a failure in the drive device (8) the actuating device (30) moves the piston (1a) of the piston-cylinder system directly or via a transmission.

3. Braking system according to Claim 1 or 2, **characterised in that** the braking system has two piston-cylinder systems arranged parallel to one another and a drive device is assigned to each piston, the drive device moving the respectively associated piston.

4. Braking system according to any one of Claims 1 to 3, **characterised in that** the hydraulic lines (13, 13a) connecting the working chamber (4a', 4b') of the piston-cylinder system to the brake cylinder have a negligible flow resistance.

5. Braking system according to Claim 4, **characterised in that** the valve (14, 14a, 15, 15a) has such a large flow cross-section that the valve (14, 14a, 15, 15a) does not have any throttle function, wherein the valve (14, 14a, 15, 15a) in particular is a 2/2 sliding valve.

6. Braking system according to any one of the preceding claims, **characterised in that** the control and regulating device (22) has a knowledge database, in particular in the form of performance characteristics, which in particular is adaptive in design.

7. Method for adjusting pressure in at least one brake cylinder of a braking system according to any one of the preceding claims, **characterised in that** optionally, simultaneously or successively, the pressure in one or a plurality of brake cylinders is adjusted by means of the at least one piston-cylinder system and the valves assigned to the wheel brakes, wherein the rate of change in the build-up of pressure and/or in the reduction in pressure in the wheel brakes is adjusted by means of the piston-cylinder system as a function of the driving state or of the brake regulation of the vehicle or of the respective wheel to be braked.

8. Method according to Claim 7, **characterised in that** the rate of change in the build-up of pressure and/or in the reduction in pressure in a wheel brake changes during a control cycle.

9. Method according to Claim 8, **characterised in that** the rate of change in the build-up of pressure and/or in the reduction in pressure changes during the time in which a valve (14, 14a, 15, 15a) of a wheel brake is open, in particular is high at the start and is reduced towards the end of the pressure reduction phase or pressure build-up phase.

10. Method according to any one of Claims 7 to 9, **characterised in that** the control and regulating device (22) determines the required build-up of pressure, the reduction in pressure, the pressure maintenance phases and/or the optimum slip for the respective wheel or all braked vehicle wheels at least from the respective wheel speed, the vehicle acceleration and the pressure in the respective brake cylinder of the wheel brake.

11. Method according to any one of Claims 7 to 10, **characterised in that** the control and regulating device (22) during the build-up of pressure or the reduction in pressure for a first wheel brake opens the valve (14, 14a, 15, 15a) associated with the wheel brake and directly after adjusting the pressure determined by the regulator for the first brake closes the valve (14, 14a, 15, 15a) associated with the first wheel brake and by opening the valve for the second wheel brake adjusts the required pressure for the second wheel brake by means of the piston-cylinder system.

12. Method according to Claim 11, **characterised in that** the required pressure reduction or pressure build-up for the wheel to be adjusted next is calculated in particular by means of the measured wheel acceleration and the moment of inertia of the wheel, in particular from the performance characteristics.

13. Method according to any one of Claims 7 to 12, **characterised in that** the pressure reduction with two wheel brakes occurs by opening the respectively associated valves (14, 14a, 15, 15a) at the same time, in particular if approximately the same pressure level prevails in the brake cylinders of the two wheel brakes at the start or in the first control cycle of a braking operation.

14. Method according to Claim 13, **characterised in that** the valve (14, 14a, 15, 15a) for a first wheel, rather than the valve (14, 14a, 15, 15a) of the second wheel, is closed.

15. Method according to any one of Claims 7 to 14, **characterised in that** the control and regulating device (22) has a memory, in which the pressure adjusted at the moment the associated valve of a wheel brake is closed and/or the pressure signal, like for example the motor current or piston position, is/are stored.

16. Method according to any one of Claims 7 to 15, **characterised in that** during the control by means of the piston-cylinder system an admission pressure is adjusted which is approx. 10 to 30%, in particular 20%, above the pressure to be adjusted.

17. Method according to any one of Claims 7 to 16, **characterised in that** the motor or piston is held for a short time in its position after reaching the build-up pressure, in order to ensure that the solenoid valve (14, 14a, 15, 15a) last opened is fully closed.

18. Method according to any one of Claims 7 to 17, **characterised in that** the response time (tᵥₐ) of the drive device is short to achieve a large pressure reduction rate (dp_{ab}/dt) and/or pressure build-up rate (dpₐᵤ/dt), in particular in such a way that the rate of the change in pressure is greater than 1500 bar per second.

19. Method according to any one of Claims 7 to 18, **characterised in that** the pressure reduction rate (dp_{ab}/dt) is selected or adjusted to be very high if a plurality of wheels are simultaneously determined by the regulator to be reduced in pressure.

20. Method according to any one of Claims 7 to 19, **characterised in that** the regulator calculates the optimum pressure to achieve the optimum slip for the braked wheel and the pressure for the associated wheel brake is built up to a pressure which is slightly lower, in particular 1-20%, preferably 5-10%, lower than the calculated optimum pressure, in such a way that exceeding the optimum slip again is avoided.

21. Method according to Claim 20, **characterised in that** to achieve the optimum slip the pressure is built up in stages, wherein firstly a large pressure increase takes place after the control cycle, followed by pressure maintenance phases alternating with pressure build-up phases with low changes in pressure in each case.

22. Method according to Claim 21, **characterised in that** during a pressure maintenance phase for a first wheel, a pressure build-up phase for a second wheel is initiated or carried out by means of the same piston-cylinder system.

23. Method according to any one of Claims 7 to 22, **characterised in that** the valves (14, 14a, 15, 15a) are designed as 2/2 way valves, and **in that** when activating the 2/2-way valves (14, 14a, 15, 15a) the regulating device takes account of their response times or idle times in such a way that the 2/2-way valves receive a command to open or close earlier by the duration of the response time of the valve, so that the valve (14, 14a, 15, 15a) is actually opened or closed at the calculated moment.

24. Method according to Claim 23, **characterised in that** the regulating device (22) controlling the 2/2-way valves (14, 14a, 15, 15a) derives the response time of the valves (14, 14a, 15, 15a) from the reaction of the activated drive device or the piston adjustment travel which has taken place following corresponding activation and stores it in a memory for subsequent control.

25. Method according to any one of Claims 7 to 24, **characterised in that** to build-up or reduce the pressure in at least one wheel brake the piston of the piston-cylinder system is already adjusted and the associated valve(s) (14, 14a, 15, 15a) subsequently open(s).

## Revendications

1. Système de freinage, qui possède un dispositif d'actionnement (30), en particulier une pédale de frein, ainsi qu'un système de commande et de réglage (22), qui commande au moins un dispositif d'entraînement électromoteur (8) conformément au déplacement et/ou à la position du dispositif d'actionnement (30), et le dispositif d'entraînement (8) déplace un piston (1a) d'un système piston-cylindre par l'intermédiaire d'un dispositif de transmission non hydraulique, de sorte qu'une pression se règle dans l'espace de travail (4a', 4b') du cylindre (4), dans lequel le piston (1a) est associé conjointement à un autre piston (1b) couplé hydrauliquement dans un cylindre, c'est-à-dire un tandem piston-cylindre, et que chaque espace de travail (4a', 4b') du tandem piston-cylindre est en relation avec au moins un frein de roue par l'intermédiaire d'une conduite de pression (13, 13a), dans lequel entre le cylindre de freinage de chaque frein de roue et un espace de travail (4a', 4b') du système piston-cylindre est disposée une soupape (14, 14a, 15, 15a), et le système de commande et de réglage (22) ouvre la soupape (14, 14a, 15, 15a) pour une chute ou une montée de pression dans le cylindre de frein et la ferme pour maintenir la pression dans le cylindre de frein, et en ce que le système de freinage présente une sonde de pression ou un capteur de pression (73b) pour la détection de la pression dans un des deux circuits de freinage ou leurs conduites de pression (13, 13a), en particulier le freinage primaire, dans lequel le système de commande et de réglage (22) règle au moyen du piston actionné (1a) simultanément ou en suivant la pression dans un ou plusieurs cylindres de freinage au moyen du système piston-cylindre et des soupapes associées (14, 14a, 15, 15a) aux freins de roue, **caractérisé en ce que** le système piston-cylindre est utilisé également pour la montée de pression de freinage et la chute de pression de freinage pour le servofrein ainsi que pour la mise en oeuvre du réglage de l'ABS et de l'antipatinage, et le système de commande et de réglage règle la montée de pression ou la chute de pression et la vitesse de changement de la montée de pression et de la chute de pression dans les freins de roue selon l'état de marche ou le réglage de freinage du véhicule ou de la roue à freiner respective au moyen du système piston-cylindre et par l'évaluation de la courbe caractéristique de volume de pression des freins de roue par l'intermédiaire du trajet de piston, le courant du moteur électrique ou la pression détectée au moyen de la sonde de pression ou du capteur de pression (73b).

2. Système de freinage selon la revendication 1, **caractérisé en ce que** le dispositif d'actionnement (30) déplace le piston (1a) du système piston-cylindre directement ou par l'intermédiaire d'une transmission en cas de défaillance du dispositif d'entraînement (8).

3. Système de freinage selon l'une des revendications 1 ou 2, **caractérisé en ce que** le système de freinage présente deux systèmes piston-cylindre disposés parallèlement l'un par rapport à l'autre, et à chaque piston est associé un dispositif d'entraînement, qui déplace le piston associé respectif.

4. Système de freinage selon l'une des revendications 1 à 3, **caractérisé en ce que** les conduites hydrauliques (13, 13a) reliant l'espace de travail (4a', 4b') du système piston-cylindre possèdent une résistance à l'écoulement négligeable.

5. Système de freinage selon la revendication 4, **caractérisé en ce que** la soupape (14, 14a, 15, 15a) présente une section d'écoulement importante, de sorte que la soupape (14, 14a, 15, 15a) ne possède aucune fonction de limitation, dans lequel la soupape (14, 14a, 15, 15a) est en particulier un distributeur à tiroir 2/2.

6. Système de freinage selon l'une des revendications précédentes, **caractérisé en ce que** le système de commande et de réglage (22) présente une banque de données scientifiques, en particulier sous la forme d'un diagramme, qui est réalisée en particulier de façon adaptative.

7. Procédé de réglage d'une pression dans au moins un cylindre de freinage d'un système de freinage selon l'une des revendications précédentes, **caractérisé en ce que** la pression est réglée au choix simultanément ou à la suite dans un ou plusieurs cylindres de freinage au moyen du au moins un système piston-cylindre et des soupapes associées aux freins de roue, dans lequel la vitesse de changement de la montée de pression et/ou de la chute de pression dans les freins de roue est réglée conformément à l'état de marche ou au réglage de freinage du véhicule ou de la roue à freiner respective au moyen du système piston-cylindre.

8. Procédé selon la revendication 7, **caractérisé en ce que** la vitesse de changement de la montée de pression et/ou de la chute de pression dans un frein de roue change pendant un cycle de réglage.

9. Procédé selon la revendication 8, **caractérisé en ce que** la vitesse de changement de la montée de pression et/ou de la chute de pression change pendant le temps où une soupape (14, 14a, 15, 15a) d'un frein de roue est ouverte, étant élevée en particulier au début et se réduisant vers la fin de la phase de la montée de pression ou de la chute de pression.

10. Procédé selon l'une des revendications 7 à 9, **caractérisé en ce que** le système de commande et de réglage (22) détecte la montée de pression nécessaire, la chute de pression, les phases de maintien de pression et/ou le patinage optimal pour la roue respective ou toutes les roues freinées du véhicule au moins à partir de la vitesse de roue respective, de l'accélération du véhicule et de la pression se trouvant dans le cylindre de freinage respectif du frein de roue.

11. Procédé selon l'une des revendications 7 à 10, **caractérisé en ce que** le système de commande et de réglage (22) ouvre la soupape (14, 14a, 15, 15a) associée au frein de roue pendant la montée de pression ou la chute de pression pour un premier frein de roue, et, immédiatement après le réglage de la pression déterminée par le régulateur pour le premier frein, ferme la soupape (14, 14a, 15, 15a) associée au premier frein de roue et règle la pression nécessaire pour le second frein de roue au moyen du système piston-cylindre grâce à l'ouverture de la soupape pour le second frein de roue.

12. Procédé selon la revendication 11, **caractérisé en ce que** la montée ou la chute de pression nécessaire pour la roue à régler suivante est calculée en particulier conformément à l'accélération de la roue mesurée et du moment d'inertie de roue, en particulier à partir du diagramme.

13. Procédé selon l'une des revendications 7 à 12, **caractérisé en ce que** la chute de pression dans deux freins de roue est effectuée grâce à l'ouverture des soupapes associées respectives (14, 14a, 15, 15a) en même temps, en particulier lorsqu'au départ il règne à peu près le même niveau de pression dans les cylindres de freinage des deux freins de roue ou pendant le premier cycle de réglage d'un processus de freinage.

14. Procédé selon la revendication 13, **caractérisé en ce que** la soupape (14, 14a, 15, 15a) pour une première roue est fermée plus tôt que la soupape (14, 14a, 15, 15a) de la seconde roue.

15. Procédé selon l'une des revendications 7 à 14, **caractérisé en ce que** le système de commande et de réglage (22) possède une mémoire, dans laquelle la pression réglée au moment de la fermeture de la soupape associée d'un frein de roue et/ou le signal de pression, comme par exemple le courant de moteur ou la position du piston, est mémorisée.

16. Procédé selon l'une des revendications 7 à 15, **caractérisé en ce que** pendant le réglage au moyen du système piston-cylindre est réglée une pression préalable, qui se trouve à environ 10-30%, en particulier 20% au-dessus de la pression à régler.

17. Procédé selon l'une des revendications 7 à 16, **caractérisé en ce que** le moteur ou le piston est maintenu pendant un court moment dans sa position après avoir atteint la montée de pression, afin de s'assurer que l'électrovanne ouverte en dernier (14, 14a, 15, 15a) est complètement fermée.

18. Procédé selon l'une des revendications 7 à 17, **caractérisé en ce que** le temps de réponse (t_{VA}) du dispositif d'entraînement est court en vue de l'obtention d'une vitesse de chute de pression (dp_{ab}/dt) et/ou d'une vitesse de montée de pression (dpₐᵤ/dt) plus grande, en particulier de sorte que la vitesse de changement de pression est supérieure à 1500 bars par seconde.

19. Procédé selon l'une des revendications 7 à 18, **caractérisé en ce que** la vitesse de chute de pression (dp_{ab}/dt) est choisie ou réglée très grande, dans la mesure où plusieurs roues sont déterminées simultanément pour une chute de pression par le régulateur.

20. Procédé selon l'une des revendications 7 à 19, **caractérisé en ce que** le régulateur calcule la pression optimale en vue d'obtenir le patinage optimal pour la roue freinée et la chute de pression est exécutée pour le frein de roue associé jusqu'à une pression, qui est légèrement plus petite, en particulier 1-20%, de préférence 5-10% plus petite que la pression optimale calculée, de sorte qu'un nouveau dépassement du patinage optimal est évité.

21. Procédé selon la revendication 20, **caractérisé en ce que**, en vue d'atteindre un patinage le plus optimal possible, la chute de pression est effectuée progressivement, dans lequel tout d'abord est effectué une augmentation de pression importante après le cycle de réglage, suivi par des phases de maintien de pression en alternance avec des phases de montée de pression avec de faibles changements de pression respectifs.

22. Procédé selon la revendication 21, **caractérisé en ce qu'**une phase de montée de pression pour une seconde roue est menée ou effectuée au moyen du même système piston-cylindre pendant une phase de maintien de pression pour une première roue.

23. Procédé selon l'une des revendications 7 à 22, **caractérisé en ce que** les soupapes (14, 14a, 15, 15a) sont réalisées sous la forme de distributeurs 2/2 voies, et **en ce que** le système de réglage prend en considération lors de la commande des distributeurs 2/2 voies (14, 14a, 15, 15a) leurs temps de réponse ou leurs temps morts, de sorte que les distributeurs 2/2 voies pour le temps de réponse d'une soupape obtiennent plus rapidement un ordre pour s'ouvrir ou se fermer, de sorte que la soupape (14, 14a, 15, 15a) est effectivement ouverte ou fermée au moment calculé.

24. Procédé selon la revendication 23, **caractérisé en ce que** le système de réglage (22) commandant les distributeurs 2/2 voies (14, 14a, 15, 15a) dérive le temps de réponse des soupapes (14, 14a, 15, 15a) à partir de la réaction du dispositif d'entraînement ou du trajet de déplacement du piston effectué selon la commande correspondante et le mémorise dans une mémoire pour le réglage suivant.

25. Procédé selon l'une des revendications 7 à 24, **caractérisé en ce que** le piston du système piston-cylindre est déjà déplacé pour une chute ou une montée de pression dans au moins un frein de roue, et la ou les soupapes associées (14, 14a, 15, 15a) est/sont ouverte(s) plus tard.
